(19) Europäisches Patentamt
European Patent Office
Office européen des brevets

(11) **EP 1 346 561 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(21) Anmeldenummer: **01969728.3**

(22) Anmeldetag: **17.09.2001**

(51) Int Cl.:
***H04N 5/235*** (2006.01)

(86) Internationale Anmeldenummer:
**PCT/EP2001/010741**

(87) Internationale Veröffentlichungsnummer:
**WO 2002/052842 (04.07.2002 Gazette 2002/27)**

(54) **VERFAHREN UND VORRICHTUNG ZUR BILDERZEUGUNG UNTER VERWENDUNG MEHRERER BELICHTUNGSZEITEN**

METHOD AND DEVICE FOR GENERATING IMAGES USING SEVERAL EXPOSURE TIMES

PROCEDE ET DISPOSITIF DE PRODUCTION D'IMAGES UTILISANT PLUSIEURS TEMPS D'EXPOSITION

(84) Benannte Vertragsstaaten:
**AT BE CH CY DE DK ES FI FR GB GR IE IT LI LU MC NL PT SE TR**

(30) Priorität: **22.12.2000 DE 10064184**

(43) Veröffentlichungstag der Anmeldung:
**24.09.2003 Patentblatt 2003/39**

(73) Patentinhaber: **Fraunhofer-Gesellschaft zur Förderung der angewandten Forschung e.V. 80686 München (DE)**

(72) Erfinder:
- **SCHREY, Olaf**
  **40878 Ratingen (DE)**
- **BUSSMANN, Arndt**
  **46485 Wesel (DE)**
- **SCHWARZ, Markus**
  **47249 Duisburg (DE)**
- **HUPPERTZ, Jürgen**
  **47119 Duisburg (DE)**
- **BROCKHERDE, Werner**
  **47259 Duisburg (DE)**
- **HOSTICKA, Bedrich**
  **45478 Mülheim (DE)**
- **NITTA, Christian**
  **47169 Duisburg (DE)**

(74) Vertreter: **Schoppe, Fritz Patentanwälte Schoppe, Zimmermann, Stöckeler & Zinkler Postfach 246 82043 Pullach bei München (DE)**

(56) Entgegenhaltungen:
**EP-A- 1 003 329      DE-A- 3 733 074
US-A- 5 047 861**

## Beschreibung

Die vorliegende Erfindung bezieht sich auf ein Verfahren und eine Vorrichtung zur Bilderzeugung unter Verwendung mehrerer Belichtungszeiten und einer Mehrzahl von Bildsensorelementen, beispielsweise denen eines integrierten CMOS-Halbleiter-Bildsensors. Insbesondere bezieht sich die vorliegende Erfindung auf Verfahren und Vorrichtungen zur Bilderzeugung, die eine Temperatur- und Drift-invariante Anpassung der Ausgangskennlinien eines Bildsensors und insbesondere eines integrierten CMOS-Halbleiter-Bildsensors ermöglichen.

Zur Bildaufnahme bzw. Bilderfassung gewinnen digitale Bild-Erfassungssysteme, insbesondere solche unter Verwendung integrierter CMOS-Halbleiter-Bildsensoren, zunehmend an Bedeutung. Bei solchen Bildsensoren werden abhängig von einer Beleuchtung, d.h. einer einfallenden Lichtstrahlung, Ladungsträger in einer Photodiode, einem Phototransistor oder einem Photogate erzeugt. In der Regel wird durch die erzeugten Ladungsträger ein geladener Kondensator entladen, so daß die Entladung des Kondensators ein Maß für die einfallende Lichtstrahlung ist. Um ein die einfallende Lichtstrahlung bzw. Beleuchtung anzeigendes Signal zu erzeugen, wird das Bildsensorelement mit einer vorbestimmten Belichtungszeit belichtet, woraufhin die Spannung des Kondensators zum Auslesen des Bildsensorelements, d.h. zum Erzeugen eines Ausgangssignalwerts, abgegriffen wird. Liegt keine Beleuchtung vor, ist das abgegriffene Sensorausgangssignal maximal, während mit zunehmender Entladung des Kondensators das abgegriffene Sensorausgangssignal abnimmt und schließlich ein Sättigungsbereich erreicht wird. Die Verwendung unterschiedlicher Integrationszeiten stellt unterschiedliche Verstärkungen dar, so daß für längere Belichtungszeiten der Sättigungsbereich bereits bei einem geringeren Sensoreingangssignal erreicht wird. Dagegen ist bei der Verwendung kurzer Belichtungszeiten die Empfindlichkeit für kleine Sensoreingangssignale zu gering.

Um einen größeren Aussteuerbereich erhalten zu können, ist es bei existierenden Bildaquisitionssystemen bekannt, verschiedene Belichtungszeiten zu verwenden. Dabei werden die bei den verschiedenen Belichtungszeiten gewonnenen Bilder unter Verwendung von Kalibrationsverfahren verknüpft. Dazu wird die quasi-lineare Sensorkennlinie nach der Herstellung des Sensors, d.h. vor der Auslieferung zum Kunden, mit einer homogenen Lichtquelle langsam durchfahren. Die Sensorausgangssignale werden mittels einer Look-up-Tabelle auf einen Wert abgebildet, der mit einer linearen Kennlinie für die jeweilige Belichtungszeit korrespondiert. Diese Werte werden dann in einem nicht-flüchtigen Speicher abgelegt. Ein entscheidender Nachteil dieses Verfahrens besteht darin, daß . Kennlinienveränderungen, die aufgrund von Betriebstemperaturschwankungen und Langzeitdrift entstehen, nicht erfaßt werden können. Je nach Kalibrationsalgorithmus können diese jedoch das Systemverhalten nachteilig verschlechtern, was einen unter Umständen teueren Ausbau des Kamerasystems, d.h. des Bildaufnahmesystems, und eine Neukalibration erforderlich macht. Damit kann jedoch auch nur die Langzeitdrift temporär kompensiert werden.

Ein weiterer Nachteil der beschriebenen Bildaquisitionssysteme besteht darin, daß der Speicherbedarf zur Ablage der Korrekturdaten enorm ist. Bei der Kalibration müssen Korrekturwerte bezüglich unterschiedlicher Ausgangssignalwerte unterschiedlicher Pixel bei fehlender Beleuchtung, d.h. zum Offset, und zur Verstärkung, um die nicht-lineare reale Kennlinie auf eine lineare Kennlinie abzubilden, ermittelt werden. Für jede mögliche Kombination, aus Offset und Verstärkung müssen die mit den Pixelausgangswerten korrespondierenden "wahren" Ausgangssignale in einer Look-up-Tabelle abgelegt werden. Bei einer 1024 x 1024 Pixelmatrix mit einer Pixeltiefe von 16 Bit, zwei Belichtungszeiten, d.h. Verstärkungen, und einem mittleren Offset ergibt sich somit schon ein Speicherbedarf von 4 MByte für die Look-up-Tabelle. Die bisherigen Realisierungen hochdynamischer Kamerasysteme mit Mehrfachbelichtung sind somit nur mit erheblichem Kostenaufwand möglich, so daß eine praktische Realisierung derartiger Systeme nicht bekannt ist.

Aus der US 5 047 861 ist eine Vorrichtung zur Bildaufnahme mit mehreren Bildsensorelementen bekannt, bei der die Ausgangsdaten jedes Bildsensorelements einzeln korrigiert werden. Für zwei Korrekturwerte wird jeweils eine Korrekturfunktion in Abhängigkeit von den Eingangsbilddaten erzeugt. Die Korrekturdaten werden in zwei Zuweisungstabellen gespeichert.

Aus der DE 198 16 003 A1 ist ein Verfahren zum Korrigieren der Grauwerte von Bildern einer digitalen Infrarot-Kamera bekannt. Für jedes Bildsensorelement der Kamera wird für jeden Grauwert ein Korrekturkoeffizient in einer Zuweisungstabelle gespeichert, wobei die Bilddaten pixelweise mit den Korrekturkoeffizienten linearisiert werden.

Die US 5 420 421 bezieht sich auf ein Verfahren zur Kompensation von Nichtlinearitäten eines Infrarotbildsensors mit einer Mehrzahl von Sensorelementen. Dabei werden für jedes Bildelement mehrere Belichtungszeiten durchfahren, um Korrekturwerte zu erhalten. Zwischenwerte werden durch Interpolation erzeugt.

In der DE 37 33 074 C2 ist eine Schaltungsanordnung für eine pixelweise Korrektur der Bildsignale eines aus mehreren Fotoelementen bestehenden Bildsensors beschrieben, bei der die Korrekturwerte in einem Korrekturwerte-Speicher abgelegt werden. Es wird eine Schar von Kennlinien gewählt, die für alle Fotosensorelemente gilt.

Die Aufgabe der vorliegenden Erfindung besteht darin, Verfahren und Vorrichtungen zur Bilderzeugung zu schaffen, die es ermöglichen, mit reduziertem Aufwand Sensorausgangssignale, die bei verschiedenen Belichtungszeiten gewonnen werden, in ein aufgenommenes Bild zu kombinieren.

Diese Aufgabe wird durch ein Verfahren nach Anspruch 1 und eine Vorrichtung nach Anspruch 15 gelöst.

Die vorliegende Erfindung schafft ein Verfahren zur Bilderzeugung unter Verwendung einer Mehrzahl von Bildsensorelementen, die bei Verwendung unterschiedlicher Belichtungszeiten unterschiedliche Ausgangssignalwerte erzeugen, wobei für jedes Bildsensorelement ein Bildsignalwert mittels folgender Schritte erzeugt wird:

a) Erfassen eines ersten Ausgangssignalwerts bei Verwendung einer ersten Belichtungszeit;

b) Erfassen eines zugeordneten zweiten Ausgangssignalwerts bei Verwendung einer zweiten Belichtungszeit;

c) falls der erste Ausgangssignalwert einen demselben zugeordneten Grenzwert nicht überschreitet, Ermitteln des Bildsignalwerts unter Verwendung einer ersten Rechenvorschrift auf der Grundlage des ersten Ausgangssignalwerts; und

d) falls der erste Ausgangssignalwert den Grenzwert überschreitet, Ermitteln des Bildsignalwerts unter Verwendung zumindest einer zweiten Rechenvorschrift auf der Grundlage zumindest des zweiten Ausgangssignalswerts,

wobei durch die Rechenvorschriften der erste und der zweite Ausgangssignalwert derart relativ zueinander verschoben und angepaßt werden, daß kein erkennbarer Sprung zwischen einem Bildsignalwert, der gerade noch nach der ersten Rechenvorschrift ermittelt wird, und einem Bildsignalwert, der gerade schon nach der zweiten Rechenvorschrift ermittelt wird, auftritt.

Die vorliegende Erfindung schafft ferner eine Bilderzeugungsvorrichtung mit folgenden Merkmalen: einem Bildsensor mit einer Mehrzahl von Bildsensorelementen, die bei Verwendung unterschiedlicher Belichtungszeiten unterschiedliche Ausgangssignalwerte erzeugen;

einer Einrichtung zum Erfassen eines ersten Ausgangssignalwerts für jedes Bildsensorelement bei Verwendung einer ersten Belichtungszeit und zum Erfassen eines zugeordneten zweiten Ausgangssignalwerts für jedes Bildsensorelement bei Verwendung einer zweiten Belichtungszeit; und

einer Bildsignalwerterzeugungseinrichtung zur Erzeugung von jeweiligen Bildsignalwerten für jeweilige Bildsensorelemente, die eine Einrichtung zum Ermitteln des Bildsignalwerts unter Verwendung einer ersten Rechenvorschrift auf der Grundlage des ersten Ausgangssignalwerts, falls der erste Ausgangssignalwert einen demselben zugeordneten Grenzwert nicht überschreitet, aufweist, und die eine Einrichtung zum Ermitteln des Bildsignalwerts unter Verwendung zumindest einer zweiten Rechenvorschrift auf der Grundlage zumindest des zweiten Ausgangssignalswerts, falls der erste Ausgangssignalwert den Grenzwert überschreitet, aufweist,

wobei durch die Rechenvorschriften der erste und der zweite Ausgangssignalwert derart relativ zueinander verschoben und angepaßt werden, daß kein erkennbarer Sprung zwischen einem Bildsignalwert, der gerade noch nach der ersten Rechenvorschrift ermittelt wird, und einem Bildsignalwert, der gerade schon nach der zweiten Rechenvorschrift ermittelt wird, auftritt.

Die vorliegenden Erfindung basiert auf der Erkenntnis, daß es nicht mehr notwendig ist, jeweilige Pixelausgangswerte und entsprechende "liniearisierte" Werte in einer Look-up-Tabelle abzulegen, was große Speicherplatzanforderungen mit sich bringt, wenn mathematische Algorithmen zur Verrechnung der bei den verschiedenen Belichtungszeiten gewonnenen Sensorkennlinien verwendet werden. Solche Algorithmen sind einfach in einen FPGA bzw. CMOS-Bildsensor (FPGA = Field Programmable Gate Array = feldprogrammierbares Gatterarray) implementierbar, können jedoch in jedweder möglichen Form implementiert werden, z.B. in DSPs (Digital Signal Processors), in Software, in Form von ASICs, und dergleichen. Erfindungsgemäß werden nacheinander zwei oder mehr Bilder bei jeweils verschiedenen Belichtungszeiten ausgelesen. Anschließend werden diese Bilder auf eine Belichtungszeit zurückgerechnet. Im Gegensatz zu bekannten Verfahren, bei denen mittels einer Look-up-Tabelle diese Informationen bereits während der Kalibration mit in die digitale Adresse codiert werden, werden erfindungsgemäß die tatsächlich ausgelesenen Ausgangssignalwerte bei den verschiedenen Belichtungszeiten miteinander verrechnet. Damit können sämtliche Parameterschwankungen wie Temperaturgang und Langzeitdrift mit erfaßt werden. Außerdem benötigen die Verrechnungsalgorithmen nur ein Minimum an Speicher, da nur ein kleiner Teil der möglichen Sensorausgangsdaten zur Verrechnung mit herangezogen wird. Der notwendige Speicher läßt sich sogar direkt im Ansteuer-FPGA selbst bzw. im CMOS-Speicher implementieren.

Erfindungsgemäß wird somit von dem bekannten speicherintensiven Lösungsansatz abgegangen, Kalibrationsdaten bei der Sensorherstellung abzulegen und später bei der Bildgewinnung zu verwenden. Vielmehr wird erfindungsgemäß eine "Gesamtkennlinie" erzeugt, indem bei unterschiedlichen Belichtungszeiten erfaßte Ausgangssignalwerte so miteinander verrechnet werden, daß an dem Punkt, an dem virtuell die Kombination der Kennlinien stattfindet, ein stetiger Übergang sichergestellt ist, oder zumindest ein solcher Übergang, daß keine wahrnehmbaren Sprünge in einem aufgenommenen Bild auftreten, wenn für ein Pixel der Bildsignalwert auf der Grundlage des bei der ersten Belichtungszeit erfaßten Ausgangssignalwerts erzeugt wird, während für das benachbarte Pixel der Ausgangssignalwert auf der Grundlage des zugeordneten zweiten Ausgangssignalwerts berechnet wird.

Um einen solchen stetigen Übergang zu erreichen, werden die bei den unterschiedlichen Belichtungszeiten erfaßten Ausgangssignalwerte auf eine Belichtungszeit zurückgerechnet, indem der Offset zwischen erstem und zweitem Ausgangsignalwert in dem Bereich des dem ersten Ausgangssignalwert zugeordneten Grenzwert, d.h. dem Wert, bis zu dem der Bildsignalwert auf der Grundlage des ersten Ausgangssignalwerts erzeugt wird, kompensiert wird. Dies geschieht durch eine Relativverschiebung des ersten und zweiten Ausgangssignalwerts um den entsprechenden Offset bzw. die entsprechende Differenz. Durch die Verschiebung wird bewirkt, daß die einzelnen, den ersten bzw. zweiten Ausgangssignalwerten zugeordneten Kennlinien einen Berührungs- bzw. Schnitt-Punkt aufweisen, so daß eine Geamtkennlinie erzeugt wird.

Um auch bei unterschiedlichen Langzeitdrifts bzw. Temperaturdrifts bzw. alterungsbedingten Verschlechterungen von Bildsensorelementen eine im wesentlichen stetige "Gesamtkennlinie" zu ermöglichen, so daß keine erkennbaren Sprünge auftreten, wird erfindungsgemäß eine Anpassung der Kennlinien im Bereich des Umschaltpunkts vorgenommen.

Gemäß einem ersten Ausführungsbeispiel erfolgt die Anpassung durch die Verwendung von Gewichtungsfunktionen in einem Überlappungsbereich.

Gemäß einem zweiten Ausführungsbeispiel erfolgt die Anpassung durch eine laufende Aktualisierung des Offsets zwischen erstem und zweitem Ausgangssignalwert, wobei der Offset zwischen den unterschiedlichen Belichtungszeiten zugeordneten Kennlinien während des Betriebs erfaßt wird, so daß Abweichungen dieses Offsets aufgrund von Langzeitdrifts und dergleichen kompensiert werden können, so daß eine adaptive Kennlinienanpassung stattfindet, die stets einen stetigen Übergang an dem Punkt, an dem Kennlinien kombiniert werden, sichergestellt ist.

Gemäß einem dritten Ausführungsbeispiel erfolgt die Anpassung durch die Verwendung eines laufend aktualisierten Faktors, der von dem tatsächlichen Verhältnis der beiden Belichtungszeiten abhängt. Zu diesem Zweck wird, um einen stetigen Übergang am Verbindungspunkt der Kennlinien der unterschiedlichen Belichtungszeiten sicherzustellen, das Verhältnis der Verstärkungen bei den unterschiedlichen Belichtungszeiten während des Betriebs erfaßt und bei der Rückrechnung der bei den unterschiedlichen Belichtungszeiten erfaßten Ausgangssignalwerte auf eine Belichtungszeit berücksichtigt.

In jedem Fall können die verschiedenen Steigungen der Kennlinien, die durch die unterschiedlichen Belichtungszeiten bewirkt werden, berücksichtigt werden, um an dem Grenzwert keinen Knick in der Gesamtkennlinie zu erhalten.

Die vorliegende Erfindung schafft somit ein Bildsensorsystem, das die Möglichkeit eines erhöhten Aussteuerbereichs unter Einsparung von Speicherbedarf liefert. Je nach Ausführungsbeispiel ist es lediglich notwendig für jedes Bildelement einige wenige Daten zu speichern, beispielsweise den anfänglichen Offset bzw. die Differenz zwischen erstem und zweitem Ausgangssignalwert bei dem dem ersten Ausgangssignalwert zugeordneten Grenzwert und das Verhältnis zwischen erster und zweiter Belichtungszeit. Alternativ kann jeweils eine adaptive Anpassung dieser Werte erfolgen, wie es bei der Beschreibung der bevorzugten Ausführungsbeispiele im folgenden dargelegt wird. Eine Speicherung der gesamten Kalibrationsinformationen, wie es gemäß dem Stand der Technik erforderlich war, ist bei der vorliegenden Erfindung nicht erforderlich.

Die vorliegende Erfindung ist somit speziell in der modernen, industriellen Bildverarbeitung, aber auch in Fahrzeuganwendungen und auf dem Gebiet der Überwachungstechnik vorteilhaft einsetzbar, bei denen hochdynamische CMOS-Bildsensoren erwünscht sind, die eine sehr gute Bildqualität besitzen. Die erfindungsgemäßen Verfahren und Vorrichtungen beruhen auf dem Ausleseprinzip der Mehrfachintegration bzw. Mehrfachbelichtung und ermöglichen es, die bei den verschiedenen Belichtungszeiten aufgenommenen Bilder mit einfachen Algorithmen und gleichzeitig stabil gegen Temperatur und Langzeitdrift miteinander zu einem hochdynamischen Bild zu verrechnen. Somit kommt der Anwender in die Lage, hochdynamische Bildszenen elektronisch in Echtzeit verarbeiten zu können. Daraus ergibt sich eine Fülle von Anwendungsgebieten, beispielsweise Inspektions- und Plazierungs-Systeme, die zur zuverlässigen Objekt-Erkennung und Objektklassifizierung auf fehlerfreie Bildinformationen angewiesen sind, oder Überwachungsaufgaben beispielsweise bei der Kraftfahrzeug-Innenraumerkennung, bei Diebstahlsicherungssystemen, bei Fahrbahnerkennungssystemen oder bei der Pre-Crash-Sensorik. In den genannten Anwendungsgebieten besteht ein großer Bedarf an Bildverarbeitungssystemen, welche schnell bezüglich jeder Situation reagieren können, wobei z. B. bei der Pre-Crash-Sensorik vom Kamerasystem mehrere hundert Bilder pro Sekunde geliefert werden müssen. Somit darf der Verrechnungsalgorithmus die im System erreichbare Bildrate nicht limitieren. Daraus ergibt sich das Erfordernis nach einem einfachen und zugleich robusten Algorithmus, der vorzugsweise Temperatur- und Langzeit-stabil ist. Die im Rahmen dieser Anmeldung präsentierten Algorithmen lassen sich in Speichermatrizen sowie allgemein in Sensor-Zeilen und - Arrays implementieren.

Bevorzugte Ausführungsbeispiele der vorliegenden Erfindung werden nachfolgend bezugnehmend auf die beiliegenden Zeichnungen näher erläutert. Es zeigen:

Fig. 1     eine vereinfachte schematische Darstellung einer erfindungsgemäßen Bilderzeugungsvorrichtung;

Fig. 2     eine schematische Darstellung von Sensorkennlinien bei unterschiedlichen Belichtungszeiten;

Fig. 3    eine schematische Darstellung zur Erläuterung eines ersten Ausführungsbeispiels der vorliegenden Erfindung; und

Fig. 4    eine schematische Darstellung zur Erläuterung eines weiteren Ausführungsbeispiels der vorliegenden Erfindung.

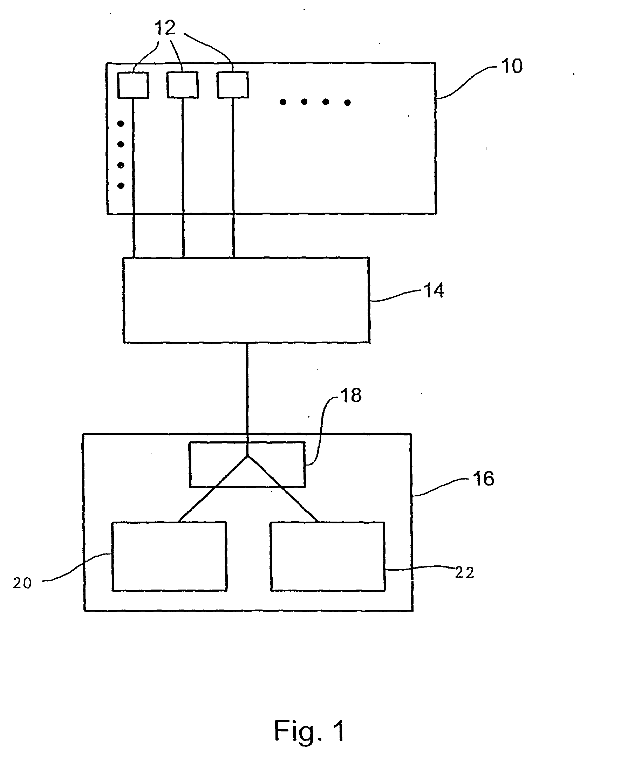

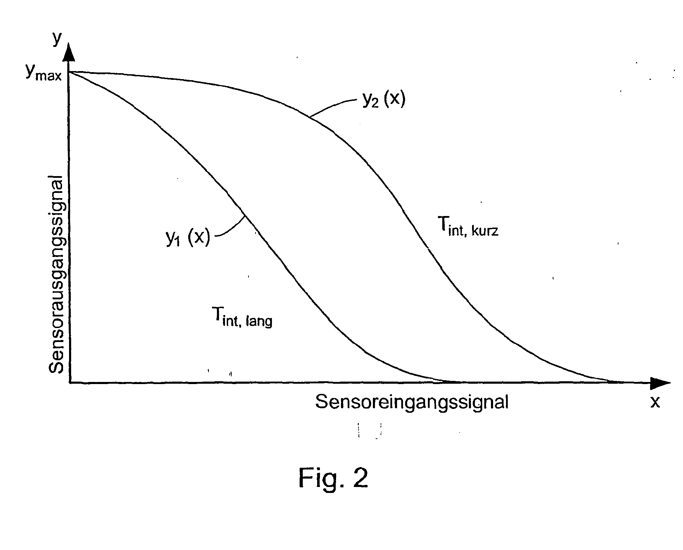

Bezugnehmend auf Fig. 1 wird zunächst allgemein eine erfindungsgemäße Bilderzeugungsvorrichtung beschrieben, woraufhin bezugnehmend auf die Fig. 2 bis 4 spezielle Ausführungsbeispiele hinsichtlich der Algorithmen, mittels derer erfindungsgemäß die bei verschiedenen Belichtungszeiten gewonnenen Sensorkennlinien verrechnet werden, beschrieben werden.

Die erfindungsgemäße Bilderzeugungsvorrichtung weist, wie in Fig. 1 gezeigt ist, einen Bildsensor 10 mit einer Mehrzahl von Bildsensorelementen 12, von denen in Fig. 1 lediglich drei schematisch dargestellt sind. Der Bildsensor 10 kann beispielsweise ein bekannter integrierter CMOS-Halbleiter-Bildsensor sein. Die Bildsensorelemente 12 sind mit einer Erfassungseinrichtung 14 verbunden, die dazu dient, Ausgangssignalwerte der jeweiligen Bildsensorelemente unter, Verwendung unterschiedlicher Belichtungszeiten zu erfassen. Diese Erfassungseinrichtung 14 ist wiederum mit einer Bildsignalwerterzeugungseinrichtung 16 verbunden, in der die erfindungsgemäßen Algorithmen zum Ermitteln der für das endgültige Bild zu verwendenden Bildsignalwerte durchgeführt werden. In dieser Bildsignalwerterzeugungseinrichtung 16 wird für jedes Bildsensorelement 12 ein Bildsignalwert erzeugt bzw. berechnet, der in dem späteren Bild ein Pixel darstellt.

Bei einem bevorzugten Ausführungsbeispiel dient die Erfassungseinrichtung 14 zum Erfassen eines ersten Ausgangssignalwerts für jedes Bildsensorelement 12 unter Verwendung einer ersten Belichtungszeit und zum Erfassen eines zweiten Ausgangssignalwerts für jedes Bildsensorelement 12 unter Verwendung einer zweiten Belichtungszeit. Die Bildsignalwerterzeugungseinrichtung 16 vergleicht unter Verwendung eines Komparators 18 den ersten Ausgangssignalwert mit einem vorgegebenen Grenzwert $y_o$. Der vorgegebene Grenzwert $y_o$ hängt dabei von der Sensorkennlinie bei der ersten Belichtungszeit ab und liegt in einem Bereich vor dem Sättigungsbereich dieser Sensorkennlinie, beispielsweise etwa 20% über der unteren Grenze des Aussteuerbereichs, so daß im Bereich oberhalb des Grenzwerts $y_o$ die Sensorkennlinie als näherungsweise linear angesehen werden kann. Alternativ kann eine Nachführungseinrichtung vorgesehen sein, die eine adaptive Nachstellung des Grenzwerts $y_o$ bewirken kann, indem beispielsweise eine Vorrichtung vorgesehen ist, mittels derer Artefakte in aufgenommenen Bildern, beispielsweise Sprünge, erfaßt werden können.

Ergibt der Vergleich im Komparator 18, daß der erste Ausgangssignalwert größer ist als der Grenzwert $y_o$, wird der Bildsignalwert für das Bildsensorelement, dem dieser erste Ausgangssignalwert zugeordnet ist, unter Verwendung einer Einrichtung 20 erzeugt, die denselben auf der Grundlage des ersten Ausgangsignalwerts unter Verwendung einer ersten Rechenvorschrift erzeugt. Ergibt der Vergleich im Komparator 18, daß der erste Ausgangssignalwert kleiner ist als der Grenzwert $y_o$, wird der Bildsignalwert für das entsprechende Bildsensorelement in einer Einrichtung 22 der Bildsignalwerterzeugungseinrichtung 16 unter Verwendung zumindest einer zweiten Rechenvorschrift auf der Grundlage zumindest des zugeordneten zweiten Ausgangssignalwerts erzeugt, wobei durch die Rechenvorschriften eine Relativverschiebung und Anpassung der Ausgangssignalwerte bewirkt wird, wie im folgenden anhand bevorzugter Ausführungsbeispiele näher erläutert wird.

Bezugnehmend auf die Fig. 2-4 werden im folgenden spezielle Ausführungsbeispiele von Algorithmen, die erfindungsgemäß verwendet werden können, um die bei verschiedenen Belichtungszeiten gewonnen Sensorkennlinien zu verrechnen, beschrieben.

In Fig. 2 sind zwei typische Ausgangskennlinien eines CMOS-Bildsensorelements bei zwei unterschiedlichen Belichtungs- bzw. Integrations-Zeiten, einer längeren Belichtungszeit $T_{int,lang}$ und einer kürzeren Belichtungszeit $T_{int,kurz}$ gezeigt. Für die längere Belichtungszeit $T_{int,lang}$ besitzt das Sensorelement die Kennlinie $y_1(x)$, wobei x das Sensoreingangssignal, d.h. die auf das Sensorelement einfallende Beleuchtung, darstellt. Für die kürzere Integrationszeit $T_{int,kurz}$ weist das Sensorelement die Ausgangskennlinie $y_2(x)$ auf. Beide Kennlinien beginnen in der Regel bei einem Sensorausgangssignal $y_{max}$, wobei $y_{max}$ dem Ausgangssignal des Sensorelements ohne eine Beleuchtung entspricht. Erfindungsgemäß werden diese Ausgangskennlinien $y_1(x)$ und $y_2(x)$ nun unter Verwendung entsprechender Berechnungsalgorithmen in eine resultierende Gesamtkennlinie abgebildet. Grob gesprochen werden dabei die beiden Kennlinien relativ zueinander verschoben und aneinander angepaßt, so daß eine Gesamtkennlinie mit einem vergrößerten, näherungsweise linearen Aussteuerbereich gebildet wird. Bildlich gesprochen wird der vergrößerte Aussteuerbereich dadurch erreicht, daß der als näherungsweise linear anzusehende Anteil der einen Kennlinie an den als linear anzusehenden Anteil der anderen Kennlinie angehängt wird, wobei vorzugsweise die beiden linearen Bereiche steigungsmäßig aneinander angepaßt werden. Erfindungsgemäß wird dabei bewirkt, daß an dem Punkt, an dem die beiden Kennlinien aneinander gehängt werden, ein im wesentlichen stetiger Übergang erfolgt, so daß in einem erzeugten Bild sichergestellt ist, daß zwischen benachbarten Pixeln, deren Ausgangssignale aufgrund der Helligkeitsverteilung auf der Grundlage unterschiedlicher Belichtungszeiten ermittelt werden, keine erkennbaren Helligkeitssprünge, die Bildverfälschungen darstellen, auftreten.

Solche sichtbaren Helligkeitssprünge zwischen benachbarten Pixeln könnten auftreten, wenn am Kombinationspunkt der beiden Kennlinien kein stetiger Übergang stattfindet und der Bildsignalwert des einen Pixels gerade noch auf der Grundlage der einen Belichtungszeit ermittelt wird, während der Bildsignalwert des zu diesem Pixel benachbarten Pixels bereits auf der Grundlage der anderen Belichtungszeit berechnet wird.

Die in der Bildsignalwerterzeugungseinrichtung erfindungsgemäß durchgeführten Berechnungsalgorithmen entsprechen somit einer mathematischen Kombination von bei unterschiedlichen Belichtungszeiten aufgenommenen Kennlinien, so daß zum einen ein vergrößerter näherungsweise linearer Aussteuerbereich entsteht und zum anderen eine Temperatur- und Langzeitdrift-Kompensation möglich ist.

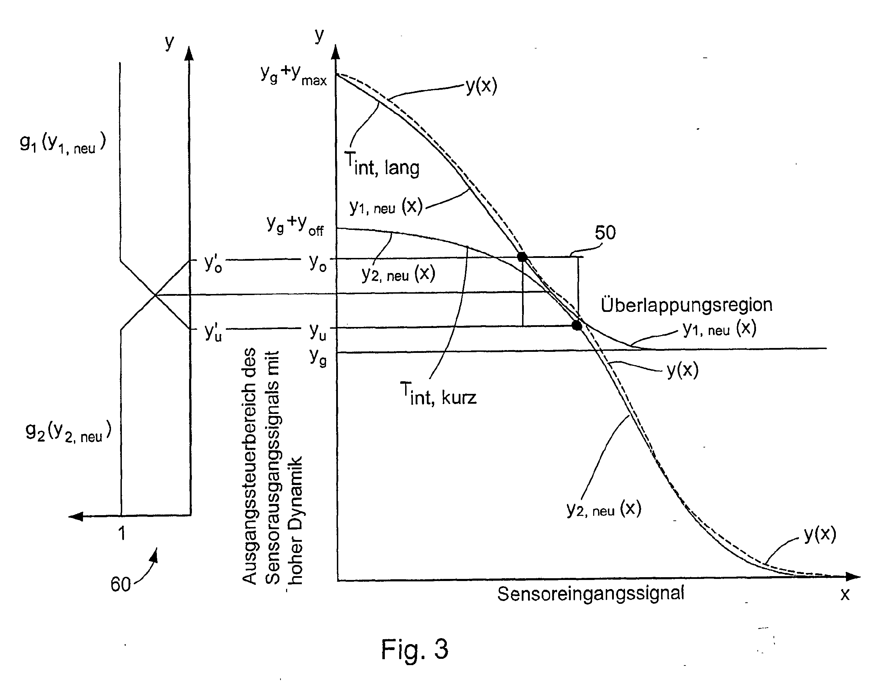

Ein erstes Ausführungsbeispiel eines in der Bildsignalwerterzeugungseinrichtung durchgeführten Berechnungsalgorithmusses wird nachfolgend bezugnehmend auf Fig. 3, in der schematisch eine kombinierte Gesamtkennlinie dargestellt ist, erläutert.

In Fig. 3 ist eine aus den bei der Belichtungszeit $T_{int,lang}$ gewonnenen Ausgangssignalwerten $y_1(x)$ unter Verwendung einer ersten Rechenvorschrift ermittelte Kennlinie $y_{1,neu}(x)$ als durchgezogene Linie dargestellt. Die Kennlinie $y_{1,neu}(x)$ ist aus modifizierten ersten Ausgangssignalwerten gebildet. Die erste Rechenvorschrift lautet bei dem dargestellten Ausführungsbeispiel:

$$Y_{1,neu}(x) = y_1(x) + y_g \qquad\qquad (Gl.1)$$

wobei $y_g$ den Abstand bzw. die Differenz der Ausgangssignalwerte bzw. Ausgangskennlinien $y_1(x)$ und $y_2(x)$ im Bereich eines Grenzwerts $y_o$ entspricht. Die Kennlinie $y_{1,neu}(x)$ besitzt somit einen Wert $y_g + y_{max}$, wenn keine Beleuchtung vorliegt.

In Fig. 3 ist ferner eine aus der der kurzen Belichtungszeit zugeordneten Kennlinie $y_2(x)$ gewonnene Kennlinie $y_{2,neu}(x)$ gezeigt, die mit der Kennlinie $y_{1,neu}(x)$ kombiniert ist, um eine Gesamtkennlinie $y(x)$ zu bilden. Die Kennlinie $y_{2,neu}(x)$ ist in Fig. 3 strichpunktiert dargestellt, während die Gesamtkennlinie $y(x)$ gestrichelt dargestellt ist.

Ein ermittelter modifizierter erster Ausgangssignalwert wird als der Bildsignalwert verwendet, solange der erste Ausgangssignalwert $y_1(x)$ den ihm zugeordneten Grenzwert $y_o$ nicht überschreitet, d.h. nicht unter denselben abfällt. Dies ist gleichbedeutend mit der Feststellung, daß der modifizierte erste Ausgangssignalwert $y_{1,neu}(x)$ unter den in Fig. 3 gezeigten Grenzwert $y'_o$ abfällt, wobei gilt: $y'_o = y_o + y_g$.

Der Grenzwert $y_o$ kann im wesentlichen frei festgelegt werden, derart, daß er in einem noch als näherungsweise linear anzusehenden Bereich der Kennlinie $y_1(x)$ liegt, d.h. außerhalb des Sättigungsbereichs dieser Kennlinie. Beispielsweise kann der Grenzwert $y_o$ 20% oberhalb des normalen Aussteuerungsbereichs der Kennlinie $y_1(x)$ festgelegt werden.

Wie in Fig. 3 gezeigt ist, ist oberhalb des Grenzwerts $y_o$ bei dem gezeigten Ausführungsbeispiel die Gesamtkennlinie $y(x)$ durch der Kennlinie $y_{1,neu}(x)$ gebildet. Unterhalb eines der Kennlinie $y_{2,neu}(x)$ zugeordneten Grenzwerts $y_u$, der zusammen mit dem oberen Grenzwert $y'_o$ eine Überlappungsregion bzw. Übergangsregion 50 bildet, ist die Gesamtkennlinie $y(x)$ durch die Kennlinie $y_{2,neu}(x)$ gebildet, deren Berechnung nachfolgend dargelegt wird. Schließlich besteht die Gesamtkennlinie $y(x)$ in der Überlappungsregion 50 aus einer Kombination aus gewichteter Kennlinie $y_{1,neu}(x)$ und gewichteter Kennlinie $y_{2,neu}(x)$, wie ebenfalls im folgenden dargelegt wird. An dieser Stelle sei angemerkt, daß der untere Grenzwert $y_u$ der Überlappungsregion abhängig von der Kennlinie $y_{2,neu}(x)$ derart gewählt wird, daß er in einem als näherungsweise linear anzusehenden Bereich derselben angrenzend an den nicht-linearen Bereich für kleine Sensorausgangssignale liegt.

Zur Berechnung der Kennlinie $y_{2,neu}(x)$ aus der Kennlinie $y_2(x)$ wird bei dem in Fig. 3 gezeigten Ausführungsbeispiel ein konstanter Faktor zwischen den Belichtungszeiten $T_{int,lang}$ und $T_{int,kurz}$ verwendet. Dieser Faktor ist die durch die von außen in den Sensor programmierten Belichtungszeiten vorgegeben. Unter der vereinfachten Annahme, daß die Kurven bzw. Kennlinien $y_1(x)$ und $y_2(x)$ im zu betrachtenden Bereich linear sind, gelten die folgenden Zusammenhänge:

$$y_1(x) = m_1 \cdot x + y_{max,1}; \quad y_2(x) = m_2 \cdot x + y_{max,2} \qquad (Gl.2)$$

In der obigen Gleichung bezeichnen $m_1$ und $m_2$ die jeweilige Steigung, wenn die Kennlinien $y_1(x)$ und $y_2(x)$

6

als linear betrachtet werden. Die Werte $y_{max,1}$ und $y_{max,2}$ entsprechen den Sensorausgangssignalen der beiden Kennlinien ohne Beleuchtung, d.h. für x = 0, wobei diese beiden Werte in der Regel einen identischen Wert $y_{max}$ aufweisen.

Der Faktor zwischen den Integrationszeiten beträgt:

$$K_{21} = \frac{T_{int,lang}}{T_{int,kurz}} \quad und \quad K_{12} = \frac{T_{int,kurz}}{T_{int,lang}} \qquad (Gl.3)$$

Für den Fall der Rückrechnung von $y_2(x)$ auf $y_1(x)$ wird der konstante, vorgegebene Faktor $K_{21}$ verwendet und umgekehrt. Im Fall der Rückrechnung von $y_2(x)$ auf $y_1(x)$ muß $y_2(x)$ gemäß folgender Gleichung in modifizierte zweite Ausgangssignalwerte $y_{2,neu}(x)$ umgerechnet werden:

$$y_{2,neu}(x) = K_{21} \cdot (y_2(x) - y_{max,2}) + y_{off} \qquad (Gl.4)$$

Die obige Gleichung 4 bedeutet, daß zunächst die Steigung von $y_2(x)$ durch Subtraktion des Wertes $y_{max,2}$ bei Maximalaussteuerung ermittelt wird. Anschließend wird die Steigung $m_2$ durch Multiplikation mit $K_{21}$ auf die Steigung $m_1$ zurückgerechnet. Die resultierende Kurve muß nun noch um den Offset $y_{off}$ verschoben werden, um den in Fig. 3 gezeigten erweiterten Ausgangssteuerbereich mit hoher Dynamik zu erhalten. Der Offset $y_{off}$ hängt dabei von dem Wert $y_g$ ab, um den die Kennlinie $y_1(x)$ verschoben wurde.

Entspricht, wie bei dem beschriebenen Ausführungsbeispiel, der Wert $y_g$ dem Abstand $y_{diff}$ der beiden Kennlinien im Bereich des Grenzwerts $y_o$, so weist $y_{off}$ den Wert $y_{max,2}$ auf. Der Zusammenhang zwischen $y_g$ und $y_{off}$ lautet wie folgt:

$$y_{off} = y_{max,2} + \left(y_g - y_{diff}\right) \qquad (Gl.5)$$

Folglich wird durch die jeweils durchgeführten Verschiebungen der Kennlinien um $y_g$ bzw. $y_{off}$ eine Relativverschiebung derselben zueinander um $y_{diff}$ bewirkt. Bei dem in Fig. 3 gezeigten Beispiel hat die Relativverschiebung zur Folge, daß näherungsweise in der Mitte des Überlappungsbereichs 50 eine Berührung bzw. ein Schnittpunkt der Kennlinien $y_{1,neu}(x)$ und $y_{2,neu}(x)$ auftritt.

Bei dem gezeigten Ausführungsbeispiel hat die Wahl des Werts von $y_g$ zur Folge, daß die Gesamtkennlinie für alle Sensoreingangssignale Sensorausgangssignale mit gleichen Vorzeichen liefert.

Bei dem in Fig. 3 dargestellten Ausführungsbeispiel besteht der Algorithmus zur Anpassung der bei den beiden Belichtungszeiten ermittelten Ausgangssignalwerte nun darin, im Überlappungsbereich die Kennlinien $y_{1,neu}(x)$ und $y_{2,neu}(x)$ durch programmierbare Gewichtungsfunktionen $g_1(y_{1,neu})$ und $g_2(y_{2,neu})$ aneinander anzupassen. Derartige Gewichtungsfunktionen sind auf der linken Seite von Fig. 3 schematisch in einem Koordinatensystem dargestellt, das mit dem Bezugszeichen 60 bezeichnet ist. Wie gezeigt ist, besitzt die Gewichtungsfunktion $g_1(y_{1,neu})$ bei dem Grenzwert $y'_o$ einen Wert von 1 und nimmt bis zu dem unteren Grenzwert $y_u$ auf einen Wert von 0 linear ab. Im Gegensatz dazu besitzt die Gewichtungsfunktion $g_2(y_{2,neu})$ bei dem unteren Grenzwert $y_u$ einen Wert von 1 und nimmt linear ab, so daß dieselbe bei dem oberen Grenzwert $y_o$ einen Wert von 0 aufweist. Neben den gezeigten linearen Gewichtungsfunktionen können selbstverständlich andere Gewichtungsfunktionen verwendet werden, solange durch dieselben sichergestellt ist, daß dadurch eine stetige Verbindung der beiden Kennlinien bewirkt wird.

Unter Verwendung der Anpassung, wie sie oben beschrieben wurde, ergibt sich die in Fig. 3 gezeigte Gesamtkennlinie wie folgt. Liegen die bei der ersten Belichtungszeit erzeugten ersten Ausgangssignalwerte $y_1(x)$ über $y_o$, d.h., liegen die Werte von $Y_{1,neu}(x)$ über $y'_o$, so werden die modifizierten ersten Ausgangssignalwerte $y_{1,neu}(x)$ als Bildsignalwerte verwendet. Überschreiten die ersten Ausgangssignalwerte $y_1(x)$ den Grenzwert $y_o$ und werden modifizierte zweite Ausgangssignalwerte $y_{2,neu}(x)$ erzeugt, die größer als $y_u$ sind, so werden die Wertepaare von $y_{1,neu}(x)$ und $y_{2,neu}(x)$ mittels der Gewichtungsfunktionen $g_1(y_{1,neu})$ und $g_2(y_{2,neu})$ miteinander verrechnet. Sind die ersten Ausgangssignal-

werte $y_1(x)$ kleiner $y_o$ und die modifizierten zweiten Ausgangssignalwerte $y_{2,neu}(x)$ kleiner als $y_u$, so werden die modifizierten zweiten Ausgangssignalwerte $y_{2,neu}(x)$ als die Bildsignale verwendet.

Die vollständige mathematische Beschreibung des Kennlinienanpassungsalgorithmusses gemäß dem beschriebenen Ausführungsbeispiel, das die in Fig. 3 gezeigte Gesamtkennlinie $y(x)$ ergibt, lautet somit wie folgt:

$$y(x) = \begin{cases} y_{1,neu}(x) & \text{für } y_1(x) \geq y_o \\[2ex] g_1(y_{1,neu}) \cdot y_{1,neu}(x) + g_2(y_{2,neu}) \cdot y_{2,neu}(x) \quad \text{für} \\[1ex] \qquad\qquad y_1(x) < y_o \quad \text{und} \quad y_{2,neu}(x) > y_u \\[2ex] y_{2,neu}(x) \text{ für } y_1(x) < y_o \quad \text{und} \quad y_{2,neu}(x) < y_u \end{cases}$$

$$(Gl.6)$$

Durch diesen Berechnungsalgorithmus ist gewährleistet, daß durch die Addition der Kennlinien im Überlappungsbereich zwischen $y'_o$ und $y_u$ immer ein stetiger Übergang zwischen $y_{1,neu}(x)$ und $y_{2,neu}(x)$ sichergestellt ist, auch wenn es temperaturbedingt oder alterungsbedingt zu Verschiebungen der Einzelkennlinien kommt.

Neben der oben bezugnehmend auf Fig. 3 beschriebenen Anpassung der Kennlinien unter Verwendung der Gewichtungsfunktionen ist es auch möglich, eine adaptive Kennlinienanpassung durchzuführen, indem der Abstand, d.h. der Offset, zwischen den Kennlinien am Umschaltpunkt während des Betriebs nachgeführt wird. Ein solcher Algorithmus zur Anpassung der Kennlinien zum Zwecke der Meßbereichserweiterung und Temperaturdriftkompensation wird nachfolgend als ein zweites Ausführungsbeispiel der Erfindung erläutert. Derselbe kann Hardwaregerecht und damit besonders effizient implementiert werden. Die Lösung gemäß diesem Ausführungsbeispiel besteht in einem Algorithmus zur effizienten Berechnung einer Gesamtkennlinie aus den Teilkennlinien der verschiedenen Meßbereiche, die durch die Verwendung unterschiedlicher Integrationszeiten entstehen, und einem effizienten Algorithmus zur Beseitigung der durch die ursprünglichen Teilkennlinien bedingten Unstetigkeitsstellen der Gesamtkennlinien, d.h. der Überführung der zunächst unstetigen Gesamtkennlinie in eine stetige Funktion. Da das Verfahren gemäß diesem Ausführungsbeispiel eine kontinuierliche Adaption der Kennlinie auch während des Betriebs erlaubt, ist hierüber auch eine Kompensation von Kennliniendriften, beispielsweise aufgrund einer Temperaturdrift oder einer alterungsbedingten Drift möglich. Besonders effizient und einfach ist der Algorithmus gemäß diesem Ausführungsbeispiel realisierbar, wenn die Meßbereichsumschaltung, am Beispiel eines CMOS-Sensors die Umschaltung der Integrationszeiten, jeweils im Verhältnis 1:2, 1:4, 1:8 oder allgemein $1:2^m$ erfolgt, wobei m eine ganze positive Zahl ist. Hierdurch entfällt bei einer Realisierung auf einem integrierten Schaltkreis die Notwendigkeit eines Multiplizierers, bzw. vereinfacht sich dieser so weit, daß er durch eine fest verdrahtete Bitschiebeoperation ersetzt werden kann, die allein durch die interne Verdrahtung, also ohne zusätzliche Logikelemente realisierbar ist. Die folgende Gleichung (7) beschreibt die Bildung der Gesamtkennlinie aus den Teilkennlinien:

$$y(nT) = \sum_{i=1}^{K} \left[ O_i(nT) + k_i \cdot y_i(nT) \right] \cdot R(y_i), \quad \text{mit}$$

$$(Gl.7)$$

$$R(y_i) = \begin{cases} 0 & \text{für} & y_i > y_{max} - \Delta_i \\ 1 & \text{für} & 0 \leq y_i < y_{max} - \Delta_i \end{cases}$$

Die Variable nT gibt dabei einen jeweiligen Zeitpunkt an, wobei der zu einem Zeitpunkt nT gewählten Integrationszeit $T_{int,i}$ ein Sensorausgangssignal $y_i(nT)$ entspricht. Dieses wird über den Faktor $k_i$ zurückgerechnet, der den Verstärkungsfaktor, d.h. das Verhältnis der Belichtungszeiten, für zwei benachbarte Teilkennlinien angibt. Die Faktoren $k_i$ sind wiederum durch die von außen in den Sensor programmierten Belichtungszeiten vorgegeben. Ferner wird das

Sensorausgangssignal $y_i(nT)$ jeweils durch eine Verschiebung um $O_i(nT)$ an die Nachbarkennlinie angepaßt. Dieser Offset $O_i(nT)$ gibt dabei jeweils die Differenz der bei den jeweiligen Belichtungszeiten erhaltenen Ausgangssignalwerte zwischen benachbarten Teilkennlinien am Umschaltpunkt an.

Die Variable $\Delta_i$ ist die Umschaltschwelle, ab der die zur nächstlängeren Integrationszeit gehörende Ausgangskennlinie gewählt wird. Über die Funktion $R(y_i)$ werden die Eingangskurven $y_i$ nacheinander von der kürzesten bis zur längsten Integrationszeit ausgewählt. Nach der Verrechnung ergibt sich somit das Signal $y(x)$.

Wie bereits oben angegeben wurde, wird bei diesem Ausführungsbeispiel der Offset $O_i$ nachgeführt, d.h. während des Betriebs des Sensors ermittelt und angepaßt. In einem Bereich $> \Delta_i$ des Überlappungsgebiets zwischen zwei benachbarten Kennlinien $y_i$ und $y_{i+1}$ wird dieser Offset $O_i$ jeweils wie folgt ermittelt:

$$\Delta O_i\big(y_i(nT)\big) = k_i \cdot \big[y_{i+1}(nT) + O_{i+1}\big(y_{i+1}(nT)\big)\big] - \big[y_i(nT) + O_i\big(y_i((n-1)T)\big)\big] \qquad (Gl.8)$$

$$\wedge \quad O_i\big(y_i((n-1)T)\big) = O_i\big(y_i(nT)\big) + \Delta O_i\big(y_i(nT)\big)$$

Gleichung (8) beschreibt die Adaption der Offsetwerte $O_i$ für die Beseitigung der Unstetigkeitsstellen der Gesamtkennlinie an den jeweiligen Umschaltpunkten zwischen Teilkennlinien. Durch die Berechnungsvorschrift nach Gleichung (8) wird ebenfalls der Verstärkungsfehler im Umschaltpunkt kompensiert. In Gleichung (8) beschreibt der Wert $\Delta O_i(y_i(nT))$ den Nachführungswert für den Offset $O_i(nT)$, um die kontinuierliche Adaption der Gesamtkennlinie, d.h. die Vermeidung von Unstetigkeitsstellen, zu ermöglichen.

Das in diesem Algorithmus beschriebene Verfahren zur Anpassung der Kennlinie zum Zweck der Meßbereichserweiterung kann bei einem Sensorsystem mit mehreren Sensorelementen, bei bevorzugten Ausführungsbeispielen der Erfindung einem CMOS-Halbleiter-Bildsensor mit einem Array aus Bildsensorelementen, sowohl für jedes einzelne Pixel, als auch global, d.h. gemittelt über alle Pixel angewandt werden. Bei einer pixelweiten Anwendung sind lediglich die Offsetwerte $O_i(y_i(nT))$ pixelweise zu speichern, wozu jedoch nur wenige Bit notwendig sind, wobei die Bitzahl von der maximal notwendigen Offsetgröße und damit von der Sensorgröße abhängt. Im Gegensatz dazu wird bei einer globalen Offsetkorrektur nur ein Satz von Offsetwerten für das Gesamtsystem gespeichert. Die folgende Gleichung veranschaulicht dies:

$$\Delta O_i(nT) = \alpha \cdot \frac{1}{N \cdot M} \cdot \sum_{\forall Pixel} \Delta O_i\big(y_i(nT)\big), \quad \alpha \in [0,1] \qquad (Gl.9)$$

Der mittlere Korrekturwert ergibt sich durch Berechnung des Durchschnitts der pixelindividuellen Offsets $\Delta O_i$. Dieser muß auf die Dimension N x M der Matrix der Halbleiter-Bildsensorelemente normiert werden. Der Wert $\alpha$ stellt einen Gewichtungsfaktor dar, der eine Einstellung der Adaptionsgeschwindigkeit in Abhängigkeit von der Szene ermöglicht.

Alternativ ist es möglich, die Anzahl der positiven und negativen $\Delta O_i$ aus Gleichung (9) zu bestimmen und nach deren Majoritäten zu adaptieren. Damit ergibt sich:

$$\overline{\Delta O_i}(nT) = \frac{1}{N \cdot M} \cdot \sum_{\forall Pixel} signo(\Delta O_i(y_i(nT))),$$

$$(Gl.10)$$

$$signo(x) = \begin{cases} -1 & \text{für} \quad x < 0 \\ 0 & \text{für} \quad x = 0 \\ 1 & \text{für} \quad x > 0 \end{cases}$$

die Schätzvorschrift, die in Gleichung (10) dargelegt ist, ist sehr einfach in Hardware zu realisieren, da sie lediglich einen Komparator zur Berechnung der "signo"-Funktion benötigt.

Die Adaption der Offsetwerte gemäß den Gleichungen (7) bis (10) erfolgt während des gesamten Sensorbetriebs, wobei eine Korrektur eines Offsetwerts nur dann erfolgt, wenn das Sensorausgangssignal in einem Übergangsbereich $\Delta_i$, also in die Umgebung um eine Unstetigkeitsstelle bzw. in die Umgebung um die Meßbereichsgrenze fällt. Hierdurch ist gewährleistet, daß für diesen Übergang eine Anpassung der Offsetwerte nur dann erfolgt, wenn ein noch in beiden Teilkennlinienbereichen, d.h. rechts und links des Übergangs, gültige Sensorausgangssignal vorliegt. Somit erfolgt eine Korrektur eines Offsetwerts nur dann, wenn das Sensorausgangssignal noch ein gültiges Signal in den beiden an den Übergang angrenzenden Meßbereichen darstellt. Die dazu notwendige Überlappung der Meßbereiche ist gewährleistet, da, weil die Meßbereichsumschaltung wie oben beschrieben im Verhältnis 1:2, 1:4, .... 1:2$^m$ gewählt werden kann, stets ein Verhältnis gewählt werden kann, das eine teilweise Überlappung der Meßbereiche sicherstellt.

Die obige Beschreibung des zweiten Ausführungsbeispiels eines Berechnungsalgorithmusses bezieht sich auf die Verwendung von i unterschiedlichen Belichtungs- bzw. Integrations-Zeiten.

Im folgenden wird nun eine Kennlinienanpassung mit variabler Verstärkung als ein drittes Ausführungsbeispiel eines erfindungsgemäßen Berechnungsalgorithmusses erläutert. Bei den oben beschriebenen Ausführungsbeispielen wurde als Faktor zwischen den Ausgangskennlinien jeweils ein konstanter Wert $K_{21}$ bzw. $k_i$ verwendet, der durch die von außen in den Sensor programmierten Belichtungszeiten vorgegeben ist.

Bei dem nun beschriebenen dritten Ausführungsbeispiel erfolgt die erfindungsgemäße Anpassung der Teilkennlinien aneinander, indem der die unterschiedlichen Verstärkungen anzeigende Faktor zwischen den Ausgangskennlinien laufend neu aus den aktuellen Daten berechnet wird. Somit weist dieses Ausführungsbeispiel den zusätzlichen Vorteil auf, daß neben den Vorteilen der vorhergehend beschriebenen Verfahren zusätzlich Nichtidealitäten des Sensors, wie beispielsweise eine Verstärkungsfehlanpassung oder ein nicht-lineares Kennlinienverhalten effektiv mit kompensiert werden können.

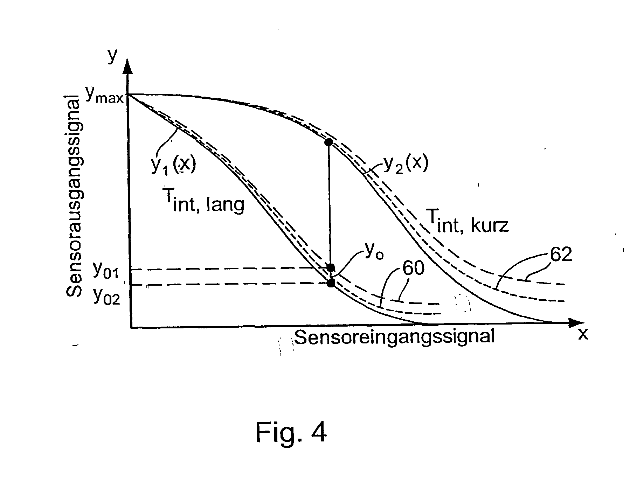

Fig. 4 zeigt ein Kennliniendiagramm, das die Kennlinien $y_1(x)$ für eine Belichtungszeit $T_{int,lang}$ und $y_2(x)$ für eine Belichtung $T_{int,kurz}$ enthält. Die Kennlinie $y_1(x)$ stellt die bei der ersten Belichtungszeit aufgenommenen ersten Ausgangssignalwerte dar, währen die Kennlinie $y_2(x)$ die bei der zweiten Belichtungszeit aufgenommenen zweiten Ausgangssignalwerte darstellt. In Fig. 4 sind ferner von $y_1(x)$ abweichende Kennlinien 60 und von $y_2(x)$ abweichende Kennlinien 62 gezeigt, die die pixelindividuellen Ausgangskennlinien der einzelnen Sensorelemente darstellen. Basierend auf diesen pixelindividuellen Ausgangskennlinien wird bei diesem Ausführungsbeispiel um den den ersten Ausgangssignalwerten zugeordneten Grenzwert $y_o$ ein Toleranzband $y_{o1}$-$y_{o2}$ definiert, das verwendet wird, um die Verstärkung zwischen den Kennlinien im durch eine Relativverschiebung der Kennlinien zueinander erzeugten Überlappungsgebiet zu ermitteln.

Zur Ermittlung der Verstärkung zwischen den Kennlinien wird unter der Voraussetzung, daß der von der vorherigen oder nachherigen Bildaufnahme herrührende zweite Ausgangssignalwert $y_2(x)$ ebenfalls zu derselben Bestrahlungsstärke bzw. Beleuchtungsstärke x gehört wie der erste Ausgangssignalwert, das Verhältnis zwischen den beiden Signalwerten gebildet und gespeichert. Die obige Voraussetzung ist bei üblicherweise verwendeten ausreichend hohen Bildraten erfüllt. Das Verhältnis zwischen den beiden Signalwerten $y_1(x)$ und $y_2(x)$ wird für alle in das Toleranzband $y_{01}$-$y_{02}$ fallenden ersten Ausgangssignalwerte $y_1(x)$ ermittelt. Aus den sich somit ergebenden N Verhältniswerten $k_j$ wird der Mittelwert berechnet, welcher ein Maß für die mittlere Verstärkung K zwischen den Kennlinien $y_1(x)$ und $y_2(x)$ ist. Die mathematische Beschreibung für die Berechnung der mittleren Verstärkung K lautet somit wie folgt:

$$K = \frac{1}{N} \sum_{j=1}^{N} k_j \qquad \text{mit} \quad k_j = \frac{y_{1,j}(x) - Y_{max,1}}{y_{2,j}(x) - Y_{max,2}}$$

$$(\text{Gl.11})$$

für alle $y_{o2} < y < y_{o1}$

Für alle Bestrahlungsstärken $x > x_o$, d.h. für alle ersten Ausgangssignalwerte $y_1(x) < y_0$ werden die von $y_2(x)$ mit dem mittleren Verstärkungsfaktor K zurückgerechneten Werte ausgegeben bzw. als Bildsignalwert verwendet. Für Bestrahlungsstärken kleiner oder gleich $x_o$, d.h. für erste Ausgangssignalwerte $y_1(x)$ größer oder gleich $y_o$ werden die mit $y_1(x)$ gewonnenen Werte ausgegeben bzw. als Bildsignalwerte verwendet. Damit gilt das folgende Bildungsgesetz für die Erzeugung der Bildsignalwerte:

$$y(x) = \begin{cases} y_1(x) + y_g & \text{für} \quad y_1(x) \geq y_o \\ y_{off} + K(y_2(x) - Y_{max,2}) & \text{für} \quad y_1(x) < y_o \end{cases}$$

$$(\text{Gl.12})$$

Bei der Verwendung einer Kennlinienanpassung mit variabler Verstärkung gemäß Gleichung (12) ist die Verwendung von Gewichtungsfunktionen wie bei dem ersten beschriebenen Ausführungsbeispiel bzw. die Nachführung des Offsetwertes während des Betriebes nicht erforderlich, um einen stetigen Übergang am Umschaltpunkt zwischen den Kennlinien zu bewirken. Vielmehr wird gemäß diesem Ausführungsbeispiel der stetige Übergang neben der Relativverschiebung um $y_g$ durch die Anpassung des Verhältnisses zwischen den zwei Kennlinien, d.h. die Berechnung der jeweiligen mittleren Verstärkung, bewirkt.

Eine noch robustere Arbeitsweise dieses Algorithmusses gemäß dem dritten Ausführungsbeispiel läßt sich erreichen, wenn man im Betrieb die dem Grenzwert $y_o$ zugeordnete Beleuchtung $x_o$ verschiebt bzw. das Gebiet $y_{o1}$-$y_{o2}$ so anpaßt, daß die Varianz der Verhältnisse $k_j$ minimal wird. Hierfür können alternativ oder in Addition auch noch andere Kriterien herangezogen werden. Bei Verwendung von mehr als zwei Integrationszeiten müssen die zu den jeweiligen Kurven gehörenden Verstärkungsfaktoren K aufmultipliziert werden bei der Rückrechnung auf die längste Integrationszeit.

Die oben beschriebenen Algorithmen zur Erzeugung von Bildsignalwerten auf der Grundlage von zumindest zwei bei unterschiedlichen Belichtungszeiten aufgenommenen Ausgangssignalwerten besitzen gegenüber bekannten Verfahren den Vorteil, daß ein einmal ausgeliefertes Kamerasystem nie mehr kalibriert zu werden braucht. Ferner ist es möglich, alterungsbedingte Toleranzen der einzelnen Bildelementparameter sowie des analogen Auslesesignalpfades mit zu erfassen und zu kompensieren. Hierzu kann bei dem ersten beschriebenen Ausführungsbeispiel zusätzlich die Breite des Überlappungsgebietes adaptiv angepaßt werden. Bei dem zweiten beschriebenen Ausführungsbeispiel erfolgt die Kompensation durch die adaptive Kennlinienanpassung unter Verwendung der Offsetberechnung, während bei dem dritten Ausführungsbeispiel diese Kompensation durch die adaptive Verstärkungsberechnung erfolgt. Dadurch wird erfindungsgemäß die Flexibilität des Kamerasystems gewahrt, was für die Zuverlässigkeit von Kamerasystemen in Automobil-, Überwachungs- und Steuerungs-Anwendungen eine entscheidende Rolle spielt.

Überdies sind die erfindungsgemäße Algorithmen sehr einfach und mit wenig Speicheraufwand zu programmieren. Einige schnelle FIFO-Speicher im FPGA oder auch direkt auf der CMOS-Bildsensor-IC (IC = integrated circuit = integrierte Schaltung) genügen völlig, um die aktuell erfaßten Ausgangswerte auf die gewünschte Kennlinie zurückzurechnen. In gleicher Weise können die Multiplikatoren der Belichtungsfunktionen bei dem ersten Ausführungsbeispiel im FPGA selbst abgelegt werden. Alternativ sind die vorgestellten Algorithmen neben FPGA- und IC-basierten Systemen in beliebigen Systemumgebungen realisierbar, die für eine Implementierung der Algorithmen in Frage kommen, beispielsweise PC-Umgebungen oder DSP-Umgebungen. Die Speicherung von Kalibrierungsdaten für jedes Bildelement, wie sie gemäß dem Stand der Technik notwendig war, ist erfindungsgemäß nicht mehr erforderlich.

Ein noch geringerer Speicheraufwand ist bei dem zweiten beschriebenen Algorithmus mit adaptiver Verstärkungsanpassung erforderlich. Hier muß lediglich die aktuell ermittelte Verstärkung zwischen beiden Kennlinien und der Verschiebungswert gespeichert werden.

Obwohl oben bevorzugte Ausführungsbeispiele der vorliegenden Erfindung beispielhaft beschrieben wurden, ist es für Fachleute klar, daß die beschriebenen Algorithmen beliebig erweitert bzw. modifiziert werden können oder auf andere Hardware bzw. Software übertragen werden können. Beispielsweise ist es im Fall der gewichteten Addition der Kennlinienwerte im Überlappungsgebiet gemäß dem ersten Ausführungsbeispiel möglich, daß der System- bzw. Software-Entwickler festlegt, ob er pixelindividuell oder global, d.h. mit einer mittleren Kennlinie, die für alle Pixel gültig ist, arbeiten will. Eine pixelindividuelle Arbeitung hat einen größeren Speicheraufwand zur Folge, der jedoch bei weitem unter dem herkömmlicher Verfahren liegt. Auch bei dem dritten beschriebenen Ausführungsbeispiel kann die Berechnung der Verstärkung pixelindividuell oder global, d.h. über alle Pixel bzw. Bildsensorelemente gemittelt berechnet werden. Darüber hinaus sind die beschriebenen Verfahren ohne weiteres auf die Verwendung von mehr als zwei Belichtungszeiten erweiterbar, wobei diesbezüglich beispielsweise auf die hinsichtlich des zweiten Ausführungsbeispiels beschriebene mathematische Herleitung verwiesen wird. Dabei ist lediglich zu beachten, daß bei Verwendung einer höheren Anzahl von Belichtungszeiten beispielsweise die Genauigkeit der Verstärkungsberechnung, geringer wird, da die Wortbreite des verwendeten Analog/Digital-Wandlers in der Regel fest ist.

Die vorliegende Erfindung ist auf alle elektronischen Schaltungs- und Sensor-Realisierungen bzw. -Prinzipien zur Bildakquisition anwendbar und eignet sich insbesondere für die Verwendung mit Photodioden, Phototransistoren und Photogates.

**Patentansprüche**

1. Verfahren zur Bilderzeugung unter Verwendung einer Mehrzahl von Bildsensorelementen (12), die bei Verwendung unterschiedlicher Belichtungszeiten unterschiedliche Ausgangssignalwerte erzeugen, wobei für jedes Bildsensorelement (12) ein Bildsignalwert $(y(x))$ mittels folgender Schritte erzeugt wird:

    (a) Erfassen eines ersten Ausgangssignalwerts $(y_1(x))$ bei Verwendung einer ersten Belichtungszeit $(T_{int,lang})$;
    (b) Erfassen eines zugeordneten zweiten Ausgangssignalwerts $(y_2(x))$ bei Verwendung einer zweiten Belichtungszeit $(T_{int,kurz})$;
    (c) falls der erste Ausgangssignalwert einen demselben zugeordneten Grenzwert $(y_o)$ nicht überschreitet, Ermitteln des Bildsignalwerts $(y(x))$ unter Verwendung einer ersten Rechenvorschrift auf der Grundlage des ersten Ausgangssignalwerts $(y_1(x))$; und
    (d) falls der erste Ausgangssignalwert den Grenzwert $(y_o)$ überschreitet, Ermitteln des Bildsignalwerts $(y(x))$ unter Verwendung zumindest einer zweiten Rechenvorschrift auf der Grundlage zumindest des zweiten Ausgangssignalswerts $(y_2(x))$,

    wobei durch die Rechenvorschriften der erste und der zweite Ausgangssignalwert $(y_1(x), y_2(x))$ derart relativ zueinander verschoben und angepaßt werden, daß kein erkennbarer Sprung zwischen einem Bildsignalwert, der gerade noch nach der ersten Rechenvorschrift ermittelt wird, und einem Bildsignalwert, der gerade schon nach der zweiten Rechenvorschrift ermittelt wird, auftritt, und
    wobei der erste und der zweite Ausgangssignalwert $(y_1(x), y_2(x))$ durch die Rechenvorschriften um einen Betrag relativ zueinander verschoben werden, der einer Differenz der beiden Ausgangssignalwerte in einem Bereich des dem ersten Ausgangssignalwert zugeordneten Grenzwerts $(y_o)$ entspricht.

2. Verfahren nach Anspruch 1, bei dem durch die erste Rechenvorschrift ein modifizierter erster Ausgangssignalwert $(y_{1,neu}(x))$ durch Addition einer Konstante $(y_g)$ zu dem ersten Ausgangssignalwert $(y_1(x))$ erzeugt wird.

3. Verfahren nach Anspruch 2, bei dem durch die zweite Rechenvorschrift ein modifizierter zweiter Ausgangssignalwert $(y_{2,neu}(x))$, der auf die erste Belichtungszeit zurückgerechnet ist, erzeugt wird.

4. Verfahren nach Anspruch 3, bei dem der modifizierte erste Ausgangssignalwert $(y_{1,neu}(x))$ als Bildsignalwert verwendet wird, wenn der erste Ausgangssignalwert $(y_1(x))$ den ihm zugeordneten Grenzwert $(y_o)$ nicht überschreitet, bei dem der modifizierte zweite Ausgangssignalwert $(y_{2,neu}(x))$ als Bildsignalwert verwendet wird, wenn der erste Ausgangssignalwert $(y_1(x))$ den ihm zugeordneten Grenzwert $(y_o)$ überschreitet und der modifizierte zweite Ausgangssignalwert $(y_{2,neu}(x))$ einen ihm zugeordneten Grenzwert $(y_u)$ überschreitet, und bei dem eine Kombination aus einem gewichteten modifizierten ersten Ausgangssignalwert und einem gewichteten modifizierten zweiten Ausgangssignalwert als Bildsignalwert verwendet wird, wenn der erste Ausgangssignalwert $(y_1(x))$ den ihm zugeordneten Grenzwert $(y_o)$ überschreitet und der modifizierte zweite Ausgangssignalwert $(y_{2,neu}(x))$ den ihm zugeordneten Grenzwert $(y_u)$ überschreitet.

5. Verfahren nach Anspruch 4, bei dem die Bildsignalwerte $y(x)$ entsprechend folgender Vorschrift ermittelt werden:

$$y(x) = \begin{cases} y_{1,neu}(x) & \text{für } y_1(x) \geq y_o \\ g_1(y_{1,neu}) \cdot y_{1,neu}(x) + g_2(y_{2,neu}) \cdot y_{2,neu}(x) & \text{für} \\ \quad y_1(x) < y_o \quad \text{und} \quad y_{2,neu}(x) > y_u \\ y_{2,neu}(x) \text{ für } y_1(x) < y_o \quad \text{und} \quad y_{2,neu}(x) < y_u \end{cases}$$

$$(Gl.6)$$

wobei $y_{1,neu}(x)$ der modifizierte erste Ausgangssignalwert ist;
$y_1(x)$ der erste Ausgangssignalwert ist;
$y_{2,neu}(x)$ der modifizierte zweite Ausgangssignalwert ist;
$g_1(y_{1,neu})$ und $g_2(y_{2,nen})$ Gewichtungsfunktionen sind;
$y_o$ der dem ersten Ausgangssignalwert zugeordnete Grenzwert ist; und
$y_u$ der dem modifizierten zweiten Ausgangssignalwert zugeordnete Grenzwert ist.

6. Verfahren nach Anspruch 5, bei dem bei der Erzeugung des modifizierten zweiten Ausgangssignalwerts ($y_{2,neu}(x)$) ein Faktor ($K_{21}$) berücksichtigt wird, der von dem Verhältnis der ersten Belichtungszeit ($T_{int,lang}$) zu der zweiten Belichtungszeit ($T_{int,kurz}$) abhängt.

7. Verfahren nach Anspruch 6, bei dem der modifizierte zweite Ausgangssignalwert $y_{2,neu}(x)$ gemäß folgender Gleichung berechnet wird:

$$y_{2,neu}(x) = K_{21} \cdot (y_2(x) - y_{max,2}) + y_{off} \qquad (Gl.4)$$

wobei ($K_{21}$) das Verhältnis zwischen den Belichtungszeiten ($T_{int,lang}$, $T_{int,kurz}$) ist;
$y_2(x)$ der zweite Ausgangssignalwert ist;
$y_{max,2}$ der zweite Ausgangssignalwert ohne Beleuchtung ist; und
$y_{off}$ ein Wert ist, der von der Konstante ($y_g$) abhängt, die zu dem ersten Ausgängssignalwert ($y_1(x)$) addiert wird.

8. Verfahren nach Anspruch 7, bei dem die Konstante $y_g$ und der Wert $y_{off}$ folgende Beziehung aufweisen:

$$y_{off} = y_{max,2} + (y_g - y_{diff}) \qquad (Gl.5)$$

wobei $y_{diff}$ einer Differenz des ersten und zweiten Ausgangssignalwerts ($y_1(x)$, $y_2(x)$) im Bereich des dem ersten Ausgangssignalwert zugeordneten Grenzwerts ($y_o$) entspricht.

9. Verfahren nach einem der Ansprüche 1 bis 3, bei dem zur Verschiebung und Anpassung durch die Rechenvorschriften eine Verschiebung des ersten und des zweiten Ausgangssignalwerts relativ zueinander bewirkt wird, deren Betrag einer Differenz ($O_i$) zwischen dem ersten Ausgangssignalwert ($y_1(x)$) und dem zweiten Ausgangssignalwert ($y_2(x)$) im Bereich des dem ersten Ausgangssignalwert zugeordneten Grenzwerts ($y_o$) entspricht, wobei die Differenz ($O_i$) zur Anpassung des ersten und des zweiten Ausgangssignalwerts auf der Grundlage von im Bereich des dem ersten Ausgangssignalwert zugeordneten Grenzwerts ($y_o$) erfaßten ersten und zweiten Ausgangssignalwerten ($y_1$

(x), $y_2$(x)) aktualisiert wird.

10. Verfahren nach Anspruch 9, bei dem zur Anpassung des ersten und zweiten Ausgangssignalwerts ($y_1$(x), $y_2$(x)) ferner ein Faktor ($k_i$) berücksichtigt wird, der vom Verhältnis der ersten Belichtungszeit ($T_{int,lang}$) zu der zweiten Belichtungszeit ($T_{int,kurz}$) abhängt.

11. Verfahren nach einem der Ansprüche 1 bis 3, bei dem zur Verschiebung und Anpassung durch die Rechenvorschriften eine Verschiebung des ersten und des zweiten Ausgangssignalwerts relativ zueinander bewirkt wird, deren Betrag einer Differenz ($y_{diff}$) zwischen dem ersten Ausgangssignalwert ($y_1$(x)) und dem zweiten Ausgangssignalwert ($y_2$(x)) im Bereich des dem ersten Ausgangssignalwert zugeordneten Grenzwerts ($y_o$) entspricht, und zur Anpassung des ersten und des zweiten Ausgangssignalwerts ($y_1$ (x), $y_2$(x)) ein Faktor (K), der von dem Verhältnis der Belichtungszeiten ($T_{int,lang}$, $T_{int,kurz}$) abhängt, verwendet wird, wobei der vom Verhältnis der Belichtungszeiten abhängige Faktor (K) auf der Grundlage von erfassten ersten und zweiten Ausgangssignalwerten, die innerhalb eines vorbestimmten Intervalls ($y_{o1}$, $y_{o2}$) von Signalwerten liegen, aktualisiert wird.

12. Verfahren nach Anspruch 11, bei dem der Faktor K, der vom Verhältnis der Belichtungszeiten abhängt, gemäß folgender Gleichung bestimmt wird:

$$K = \frac{1}{N} \sum_{j=1}^{N} k_j \quad \text{mit} \quad k_j = \frac{y_{1,j}(x) - y_{max,1}}{y_{2,j}(x) - y_{max,2}}$$

$$(Gl.11)$$

für alle $y_{o2} < y < y_{o1}$
wobei $y_{1,j}$(x) die in dem Intervall zwischen $y_{o1}$ und $y_{o2}$ liegenden ersten Ausgangssignalwerte sind;
$y_{2,j}$(x) die den Werten $y_{1,j}$(x) zugeordneten zweiten Ausgangssignalwerte sind;
$y_{max,1}$ der erste Ausgangssignalwert ohne Beleuchtung ist; und
$y_{max,2}$ der zweite Ausgangssignalwert ohne Beleuchtung ist.

13. Verfahren nach Anspruch 12, bei dem die Bildsignalwerte y(x) in den Schritten (c) und (d) wie folgt ermittelt werden:

$$y(x) = \begin{cases} y_1(x) + y_g & \text{für} \quad y_1(x) \geq y_o \\ y_{off} + K(y_2(x) - y_{max,2}) & \text{für} \quad y_1(x) < y_o \end{cases}$$

$$(Gl.12)$$

wobei $y_1$(x) der erste Ausgangssignalwert ist;
$y_g$ eine Konstante ist;
$y_2$(x) der zugeordnete zweite Ausgangssignalwert ist; und
$y_{off}$ ein Wert- ist, der von der Konstante ($y_g$) abhängt, die zu dem ersten Ausgangssignalwert ($y_1$(x)) addiert wird.

14. Verfahren nach Anspruch 13, bei dem die Konstante $y_g$ und der Wert $y_{off}$ folgende Beziehung aufweisen:

$$y_{off} = y_{max,2} + (y_g - y_{diff})$$

$$(Gl.5)$$

15. Bilderzeugungsvorrichtung mit folgenden Merkmalen:

einem Bildsensor (10) mit einer Mehrzahl von Bildsensorelementen (12), die bei Verwendung unterschiedlicher Belichtungszeiten unterschiedliche Ausgangssignalwerte erzeugen;

einer Einrichtung zum Erfassen eines ersten Ausgangssignalwerts ($y_1(x)$) für jedes Bildsensorelement (12) bei Verwendung einer ersten Belichtungszeit ($T_{int,lang}$) und zum Erfassen eines zugeordneten zweiten Ausgangssignalwerts ($y_2(x)$) für jedes Bildsensorelement (12)
bei Verwendung einer zweiten Belichtungszeit ($T_{int,kurz}$) ; und

einer Bildsignalwerterzeugungseinrichtung (16) zur Erzeugung von jeweiligen Bildsignalwerten ($y(x)$) für jeweilige Bildsensorelemente (12), die eine Einrichtung (20) zum Ermitteln des Bildsignalwerts ($y(x)$) unter Verwendung einer ersten Rechenvorschrift auf der Grundlage des ersten Ausgangssignalwerts ($y_1(x)$), falls der erste Ausgangssignalwert einen demselben zugeordneten Grenzwert ($y_o$) nicht überschreitet, aufweist, und die eine Einrichtung (22) zum Ermitteln des Bildsignalwerts ($y(x)$) unter Verwendung zumindest einer zweiten Rechenvorschrift auf der Grundlage zumindest des zweiten Ausgangssignalswerts ($y_2(x)$), falls der erste Ausgangssignalwert den Grenzwert ($y_o$) überschreitet, aufweist,
wobei durch die Rechenvorschriften der erste und der zweite Ausgangssignalwert ($y_1(x)$, $y_2(x)$) derart relativ zueinander .verschoben und angepaßt werden, daß kein erkennbarer Sprung zwischen einem Bildsignalwert, der gerade noch' nach der ersten Rechenvorschrift ermittelt wird, und einem Bildsignalwert, der gerade schon nach der zweiten Rechenvorschrift ermittelt wird, auftritt, und wobei der erste und der zweite Ausgangssignalwert ($y_1(x)$, $y_2(x)$) durch die Rechenvorschriften um einen Betrag, der einer Differenz der beiden Ausgangssignalwerte in einem Bereich des dem ersten Ausgangssignalwert zugeordneten Grenzwerts ($y_o$) entspricht, relativ zueinander verschoben werden.

16. Vorrichtung nach Anspruch 15, die eine Einrichtung zum Erzeugen eines modifizierten ersten Ausgangssignalwerts ($y_{1,neu}(x)$) durch Addition einer Konstante ($y_g$) zu dem ersten Ausgangssignalwert ($y_1(x)$) durch die erste Rechenvorschrift aufweist.

17. Vorrichtung nach Anspruch 16, die eine Einrichtung zum Erzeugen eines modifizierten zweiten Ausgangssignalwerts ($y_{2,neu}(x)$), der auf die erste Belichtungszeit zurückgerechnet ist, durch die zweite Rechenvorschrift aufweist.

18. Vorrichtung nach Anspruch 17, die eine Einrichtung zur Verwendung des modifizierten ersten Ausgangssignalwerts ($y_{1,neu}(x)$) als Bildsignalwert, wenn der erste Ausgangssignalwert ($y_1(x)$) den ihm zugeordneten Grenzwert ($y_o$) nicht überschreitet, zur Verwendung des modifizierten zweiten Ausgangssignalwerts ($y_{2,neu}(x)$ als Bildsignalwert, wenn der erste Ausgangssignalwert ($y_1(x)$) den ihm zugeordneten Grenzwert ($y_o$) überschreitet und der modifizierte zweite Ausgangssignalwert ($y_{2,neu}(x)$) einen ihm zugeordneten Grenzwert ($y_u$) überschreitet, und zur Verwendung einer Kombination aus einem gewichteten modifizierten ersten Ausgangssignalwert und einem gewichteten modifizierten zweiten Ausgangssignalwert als Bildsignalwert, wenn der erste Ausgangssignalwert ($y_1(x)$) den ihm zugeordneten Grenzwert ($y_o$) überschreitet und der modifizierte zweite Ausgangssignalwert ($y_{2,neu}(x)$) den ihm zugeordneten Grenzwert ($y_u$) überschreitet, aufweist.

19. Vorrichtung nach Anspruch 18, die eine Einrichtung zur Ermittlung der Bildsignalwerte $y(x)$ entsprechend folgender Vorschrift aufweist:

$$y(x) = \begin{cases} y_{1,neu}(x) & \text{für } y_1(x) \geq y_o \\[2ex] g_1(y_{1,neu}) \cdot y_{1,neu}(x) + g_2(y_{2,neu}) \cdot y_{2,neu}(x) & \text{für} \\ \quad y_1(x) < y_o \quad \text{und} \quad y_{2,neu}(x) > y_u \\[2ex] y_{2,neu}(x) \text{ für } y_1(x) < y_o \quad \text{und} \quad y_{2,neu}(x) < y_u \end{cases}$$

$$(Gl.6)$$

wobei $y_{1,neu}(x)$ der modifizierte erste Ausgangssignalwert ist;
$y_1(x)$ der erste Ausgangssignalwert ist;
$y_{2,neu}(x)$ der modifizierte zweite Ausgangssignalwert ist;
$g_1(y_{1,neu})$ und $g_2(y_{2,neu})$ Gewichtungsfunktionen sind;

$y_o$ der dem ersten Ausgangssignalwert zugeordnete Grenzwert ist; und

$y_u$ der dem modifizierten zweiten Ausgangssignalwert zugeordnete Grenzwert ist.

**20.** Vorrichtung nach Anspruch 19, die eine Einrichtung zur Berücksichtigung eines Faktors ($K_{21}$), der von dem Verhältnis der ersten Belichtungszeit ($T_{int,lang}$) zu der zweiten Belichtungszeit ($T_{int,kurz}$) abhängt, bei der Erzeugung des modifizierten zweiten Ausgangssignalwerts ($y_{2,neu}$ (x)) aufweist.

**21.** Vorrichtung nach Anspruch 20, die eine Einrichtung zur Berechnung des modifizierten zweiten Ausgangssignalwerts $y_{2,neu}(x)$ gemäß folgender Gleichung aufweist:

$$y_{2,neu}(x) = K_{21} \cdot (y_2(x) - y_{max,2}) + y_{off} \qquad (Gl.4)$$

wobei ($K_{21}$) das Verhältnis zwischen den Belichtungszeiten ($T_{int,lang}$, $T_{int,kurz}$) ist;

$y_2(x)$ der zweite Ausgangssignalwert ist;

$y_{max,2}$ der zweite Ausgangssignalwert ohne Beleuchtung ist; und

$y_{off}$ ein Wert ist, der von der Konstante ($y_g$) abhängt, die zu dem ersten Ausgangssignalwert ($y_1(x)$) addiert wird.

**22.** Vorrichtung nach Anspruch 21, bei der die Konstante $y_g$ und der Wert $y_{off}$ folgende Beziehung aufweisen:

$$y_{off} = y_{max,2} + (y_g - y_{diff}) \qquad (Gl.5)$$

wobei $y_{diff}$ einer Differenz des ersten und zweiten Ausgangssignalwerts ($y_1(x)$, $y_2(x)$) im Bereich des dem ersten Ausgangssignalwert zugeordneten Grenzwerts ($y_o$) entspricht.

**23.** Vorrichtung nach einem der Ansprüche 15 bis 17, die eine Einrichtung zum Bewirken einer Verschiebung des ersten und des zweiten Ausgangssignalwerts relativ zueinander durch die Rechenvorschriften aufweist, wobei der Betrag der Verschiebung einer Differenz ($O_i$) zwischen dem ersten Ausgangssignalwert ($y_1(x)$) und dem zweiten Ausgangssignalwert ($y_2(x)$) im Bereich des dem ersten Ausgangssignalwert zugeordneten Grenzwerts ($y_o$) entspricht, wobei die Differenz ($O_i$) zur Anpassung des ersten und des zweiten Ausgangssignalwerts auf der Grundlage von im Bereich des dem ersten Ausgangssignalwert zugeordneten Grenzwerts ($y_o$) erfaßten ersten und zweiten Ausgangssignalwerten ($y_1(x)$, $y_2(x)$) aktualisiert wird.

**24.** Vorrichtung nach Anspruch 23, die eine Einrichtung zur Berücksichtigung eines Faktor ($k_i$), der vom Verhältnis der ersten Belichtungszeit ($T_{int,\ lang}$) zu der zweiten Belichtungszeit ($T_{int,kurz}$) abhängt, zur Anpassung des ersten und zweiten Ausgangssignalwerts ($y_1(x)$, $y_2(x)$) aufweist.

**25.** Vorrichtung nach einem der Ansprüche 15 bis 17, die eine Einrichtung zum Bewirken einer Verschiebung des ersten und des zweiten Ausgangssignalwerts relativ zueinander durch die Rechenvorschriften aufweist, wobei der Betrag der Verschiebung einer Differenz ($y_{diff}$) zwischen dem ersten Ausgangssignalwert ($y_1(x)$) und dem zweiten Ausgangssignalwert ($y_2(x)$) im Bereich des dem ersten Ausgangssignalwert zugeordneten Grenzwerts ($y_o$) entspricht, und zur Anpassung des ersten und des zweiten Ausgangssignalwerts ($y_1(x)$, $y_2(x)$) ein Faktor ($K$), der von dem Verhältnis der Belichtungszeiten ($T_{int,lang}$, $T_{int,kurz}$) abhängt, verwendet wird, wobei der vom Verhältnis der Belichtungszeiten abhängige Faktor ($K$) auf der Grundlage von erfassten ersten und zweiten Ausgangssignalwerten, die innerhalb eines vorbestimmten Intervalls ($y_{o1}$, $y_{o2}$) von Signalwerten liegen, aktualisiert wird.

**26.** Vorrichtung nach Anspruch 25, die eine Einrichtung zum Bestimmen des Faktors K, der vom Verhältnis der Belichtungszeiten abhängt, gemäß folgender Gleichung aufweist:

$$K = \frac{1}{N} \sum_{j=1}^{N} k_j \quad \text{mit} \quad k_j = \frac{y_{1,j}(x) - y_{max,1}}{y_{2,j}(x) - y_{max,2}} \qquad (Gl.11)$$

für alle $y_{o2} < y < y_{o1}$

wobei $y_{1,j}(x)$ die in dem Intervall zwischen $y_{o1}$ und $y_{o2}$ liegenden ersten Ausgangssignalwerte sind;

$y_{2,j}(x)$ die den Werten $y_{1,j}(x)$ zugeordneten zweiten Ausgangssignalwerte sind;

$y_{max,1}$ der erste Ausgangssignalwert ohne Beleuchtung ist; und

$y_{max,2}$ der zweite Ausgangssignalwert ohne Beleuchtung ist.

**27.** Vorrichtung nach Anspruch 26, die eine Einrichtung zum Ermitteln der Bildsignalwerte y(x) gemäß folgender Vorschrift aufweist:

$$y(x) = \begin{cases} y_1(x) + y_g & \text{für} \quad y_1(x) \geq y_o \\ y_{off} + K(y_2(x) - y_{max,2}) & \text{für} \quad y_1(x) < y_o \end{cases} \qquad (Gl.12)$$

wobei $y_1(x)$ der erste Ausgangssignalwert ist;

$y_g$ eine Konstante ist;

$y_2(x)$ der zugeordnete zweite Ausgangssignalwert ist; und

$y_{off}$ ein Wert ist, der von der Konstante ($y_g$) abhängt, die zu dem ersten Ausgangssignalwert ($y_1(x)$) addiert wird.

**28.** Vorrichtung nach Anspruch 27, bei der die Konstante $y_g$ und der Wert $y_{off}$ folgende Beziehung aufweisen:

$$y_{off} = y_{max,2} + \left(y_g - y_{diff}\right) \qquad (Gl.5).$$

## Claims

**1.** Method for imaging using a plurality of image sensor elements (12) generating different output signal values when using different exposure times, an image signal value (y(x)) for each image sensor element (12) being generated by means of the following steps:

(a) detecting a first output signal value ($y_1(x)$) when using a first exposure time ($T_{int,long}$);

(b) detecting an associated second output signal value ($y_2(x)$) when using a second exposure time ($T_{int,short}$);

(c) if the first output signal value does not exceed a threshold value ($y_o$) associated thereto, calculating the image signal value (y(x)) using a first calculating rule on the basis of the first output signal value ($y_1(x)$); and

(d) if the first output signal value exceeds the threshold value ($y_o$), calculating the image signal value (y(x)) using at least a second calculating rule on the basis of at least the second output signal value ($y_2(x)$),

wherein, by the calculating rules, the first and second output signal values ($y_1(x)$), ($y_2(x)$) are shifted relative to each other and adjusted such that no detectable discontinuity occurs between an image signal value still calculated according to the first calculating rule and an image signal value already calculated according to the second calculating rule, and

wherein the first and second output signal values ($y_1(x)$, $y_2(x)$) are shifted, by the calculating rules, relative to each other by an amount corresponding to a difference of the two output signal values in an area of the threshold value ($y_0$) associated to the first output signal value.

2. Method according to claim 1, wherein, by the first calculating rule, a modified first output signal value ($y_{1,new}(x)$) is generated by adding a constant ($y_g$) to the first output signal value ($y_1(x)$).

3. Method according to claim 2, wherein, by the second calculating rule, a modified second output signal value ($y_{2,new}(x)$) calculated back to the first exposure time is generated.

4. Method according to claim 3, wherein the modified first output signal value ($y_{1,new}(x)$) is used as an image signal value when the first output signal value ($y_1(x)$) does not exceed the threshold value ($y_o$) associated thereto, wherein the modified second output signal value ($y_{2,new}(x)$) is used as an image signal value when the first output signal value ($y_1(x)$) exceeds the threshold value ($y_o$) associated thereto and the modified second output signal value ($y_{2,new}(x)$) exceeds a threshold value ($y_u$) associated thereto, and wherein a combination of a weighted modified first output signal value and a weighted modified second output signal value is used as an image signal value when the first output signal value ($y_1(x)$) exceeds the threshold value ($y_o$) associated thereto and the modified second output signal value ($y_{2,new}(X)$) exceeds the threshold value ($y_u$) associated thereto.

5. Method according to claim 4, wherein the image signal values y(x) are calculated according to the following rule:

$$y(x) = \begin{cases} y_{1,new}(x) & \text{for} \quad y_1(x) \geq y_0 \\ g_1(y_{1,new}) \cdot y_{1,new}(x) + g_2(y_{2,new}) \cdot y_{2,new}(x) & \text{for} \\ \quad y_1(x) < y_0 \text{ and } y_{2,new}(x) > y_u \\ y_{2,new}(x) \text{ for} \quad y_1(x) < y_0 \text{ and } y_{2,new}(x) < y_u \end{cases} \quad \text{(Equ. 6)}$$

wherein $y_{1,new}(x)$ is the modified first output signal value;
$y_1(x)$ is the first output signal value;
$y_{2,new}(x)$ is the modified second output signal value;
$g_1(y_{1,new})$ and $g_2(y_{2,new})$ are weighting functions;
$y_o$ is the threshold value associated to the first output signal value; and
$y_u$ is the threshold value associated to the modified second output signal value.

6. Method according to claim 5, wherein when generating the modified second output signal value ($y_{2,new}(x)$) a factor ($K_{21}$) depending on the ratio of the first exposure time ($T_{int,long}$) to the second exposure time ($T_{int,short}$) is taken into account.

7. Method according to claim 6, wherein the modified second output signal value $y_{2,new}(x)$ is calculated according to the following equation:

$$y_{2,new}(x) = K_{21} \cdot (y_2(x) - y_{max,2}) + y_{off} \quad \text{(Equ. 4)}$$

wherein ($K_{21}$) is the ratio between the exposure times ($T_{int,long}$, $T_{int,short}$) ;
$y_2(x)$ is the second output signal value;
$y_{max,2}$ is the second output signal value without any illumination; and
$y_{off}$ is a value depending on the constant ($y_g$) added to the first output signal value ($y_1(x)$).

8. Method according to claim 7, wherein the constant $y_g$ and the value $y_{off}$ have the following relation:

$$Y_{off} = Y_{max,2} + (Y_g - Y_{diff}) \qquad \text{(Equ. 5)}$$

wherein $y_{diff}$ corresponds to a difference of the first and second output signal values ($y_1(x)$, $y_2(x)$) in the area of the threshold value ($y_o$) associated to the first output signal value.

9. Method according to one of claims 1 to 3, wherein for shifting and adjusting by the calculating rules a shift of the first and second output signal values relative to each other is caused, the amount of which corresponds to a difference ($O_i$) between the first output signal value ($y_1(x)$) and the second output signal value ($y_2(x)$) in the region of the threshold value ($y_o$) associated to the first output signal value, wherein the difference ($O_i$) for adjusting the first and second output signal values is updated on the basis of first and second output signal values ($y_1(x)$, $y_2(x)$) detected in the area of the threshold value ($y_o$) associated to the first output signal value.

10. Method according to claim 9, wherein for adjusting the first and second output signal values ($y_1(x)$, $y_2(x)$) a factor ($k_i$) depending on the ratio of the first exposure time ($T_{int,long}$) to the second exposure time ($T_{int,short}$) is additionally taken into account.

11. Method according to one of claims 1 to 3, wherein for shifting and adjusting by the calculating rules a shift of the first and second output signal values relative to each other is caused, the amount of which corresponds to a difference ($y_{diff}$) between the first output signal value ($y_1(x)$) and the second output signal value ($y_2(x)$) in the area of the threshold value ($y_o$) associated to the first output signal value, and for adjusting the first and second output signal values ($y_1(x)$, $y_2(x)$) a factor ($K$) depending on the ratio of the exposure times ($T_{int,long}$, $T_{int,short}$) is used, wherein the factor ($K$) depending on the ratio of the exposure times is updated on the basis of first and second output signal values detected which are within a predetermined interval ($y_{o1}, y_{o2}$) of signal values.

12. Method according to claim 11, wherein the factor $K$ depending on the ratio of the exposure times is determined according to the following equation:

$$K = \frac{1}{N}\sum_{j=1}^{N} k_j \quad \text{with} \quad k_j = \frac{y_{1,j}(x) - y_{max,1}}{y_{2,j}(x) - y_{max,2}} \qquad \text{(Equ. 11)}$$

for every $y_{o2} < y < y_{o1}$
wherein $y_{1,j}(x)$ are the first output signal values in the interval between $y_{o1}$ and $y_{o2}$;
$y_{2,j}(x)$ are the second output signal values associated to the values $y_{1,j}(x)$;
$y_{max,1}$ is the first output signal value without any illumination; and
$y_{max,2}$ is the second output signal value without any illumination.

13. Method according to claim 12, wherein the image signal values $y(x)$ are calculated in steps (c) and (d) as follows:

$$y(x) = \begin{cases} y_1(x) + y_g & \text{for} \quad y_1(x) \geq y_o \\ y_{off} + K(y_2(x) - y_{max,2}) & \text{for} \quad y_1(x) < y_o \end{cases} \qquad \text{(Equ. 12)}$$

wherein $y_1(x)$ is the first output signal value;
$y_g$ is a constant;
$y_2(x)$ is the associated second output signal value; and
$y_{off}$ is a value depending on the constant ($y_g$) added to the first output signal value ($y_1(x)$).

14. Method according to claim 13, wherein the constant $y_g$ and the value $y_{off}$ have the following relation:

$$Y_{off} = Y_{max,2} + (Y_g - Y_{diff}) \qquad \text{(Equ. 5)}$$

**15.** Imaging device comprising:

an image sensor (10) having a plurality of image sensor elements (12) generating different output signal values when using different exposure times;

means for detecting a first output signal value ($y_1(x)$) for each image sensor element (12) when using a first exposure time ($T_{int, long}$) and for detecting an associated second output signal value ($y_2(x)$) for each image sensor element when using a second exposure time ($T_{int,short}$); and

image signal value generating means (16) for generating respective image signal values ($y(x)$) for respective image sensor elements (12), comprising means (20) for calculating the image signal value ($y(x)$) using a first calculating rule on the basis of the first output signal value ($y_1(x)$) if the first output signal value does not exceed a threshold value ($y_o$) associated thereto, and comprising means (22) for calculating the image signal value ($y(x)$) using at least a second calculating rule on the basis of at least the second output signal value ($y_2(x)$) if the first output signal value exceeds the threshold value ($y_o$),

wherein, by the calculating rules, the first and second output signal values ($y_1(x)$, $y_2(x)$) are shifted relative to each other and adjusted such that no detectable discontinuity occurs between an image signal value still calculated according to the first calculating rule and an image signal value already calculated according to the second calculating rule, and wherein the first and second output signal values ($y_1(x)$, $y_2(x)$) are shifted, by the calculating rules, relative to each other by an amount corresponding to a difference of the two output signal values in a region of the threshold value ($y_0$) associated to the first output signal value.

**16.** Device according to claim 15, comprising means for generating a modified first output signal value ($y_{1,new}(x)$) by adding a constant ($y_g$) to the first output signal value ($y_1(x)$) by the first calculating rule.

**17.** Device according to claim 16, comprising means for generating a modified second output signal value ($y_{2,new}(x)$) calculated back to the first exposure time by the second calculating rule.

**18.** Device according to claim 17, comprising means for using the modified first output signal value ($y_{1,new}(x)$) as an image signal value if the first output signal value ($y_1(x)$) does not exceed the threshold value ($y_o$) associated thereto, for using the modified second output signal value ($y_{2,new}(x)$) as an image signal value if the first output signal value ($y_1(x)$) exceeds the threshold value ($y_o$) associated thereto and the modified second output signal value ($y_{2,new}(x)$) exceeds a threshold value ($y_u$) associated thereto, and for using a combination of a weighted modified first output signal value and a weighted modified second output signal value as an image signal value if the first output signal value ($y_1(x)$) exceeds the threshold value ($y_o$) associated thereto and the modified second output signal value ($y_{2,new}(x)$) exceeds the threshold value ($y_u$) associated thereto.

**19.** Device according to claim 18, comprising means for calculating the image signal values y(x) according to the following rule:

$$y(x) = \begin{cases} y_{1,new}(x) & \text{for} & y_1(x) \geq y_0 \\ g_1(y_{1,new}) \cdot y_{1,new}(x) + g_2(y_{2,new}) \cdot y_{2,new}(x) & \text{for} \\ \qquad y_1(x) < y_0 \text{ and } y_{2,new}(x) > y_u \\ y_{2,new}(x) \text{ for} & y_1(x) < y_0 \text{ and } y_{2,new}(x) < y_u \end{cases} \qquad \text{(Equ. 6)}$$

wherein $y_{1,new}(x)$ is the modified first output signal value;
$y_1(x)$ is the first output signal value;
$y_{2,new}(x)$ is the modified second output signal value;
$g_1(y_{1,new})$ and $g_2(y_{2, new})$ are weighting functions;
$y_o$ is the threshold value associated to the first output signal value; and
$y_u$ is the threshold value associated to the modified second output signal value.

**20.** Device according to claim 19, comprising means for accounting for a factor ($K_{21}$) depending on the ratio of the first exposure time ($T_{int,long}$) to the second exposure time ($T_{int,short}$) when generating the modified second output signal value ($y_{2,new}(x)$).

**21.** Device according to claim 20, comprising means for calculating the modified second output signal value $y_{2,new}(x)$ according to the following equation:

$$y_{2,new}(x) = K_{21} \cdot (y_2(x) - y_{max,2}) + y_{off} \qquad \text{(Equ. 4)}$$

wherein ($K_{21}$) is the ratio between the exposure times ($T_{int,long}$, $T_{int,short}$) ;
$y_2(x)$ is the second output signal value;
$y_{max,2}$ is the second output signal value without any illumination; and
$y_{off}$ is a value depending on the constant ($y_g$) added to the first output signal value ($y_1(x)$),

**22.** Device according to claim 21, wherein the constant $y_g$ and the value $y_{off}$ have the following relation:

$$y_{off} = y_{max,2} + (y_g - y_{diff}) \qquad \text{(Equ. 5)}$$

wherein $y_{diff}$ corresponds to a difference of the first and second output signal values ( $y_1(x)$, $y_2(x)$) in the area of the threshold value ($y_o$) associated to the first output signal value.

**23.** Device according to one of claims 15 to 17, comprising means for causing a shift of the first and second output signal values relative to each other by the calculating rules, wherein the amount of the shift corresponds to a difference ($O_i$) between the first output signal value ($y_1(x)$) and the second output signal value ($y_2(x)$) in the region of the threshold value ($y_o$) associated to the first output signal value, wherein the difference ($O_i$) for adjusting the first and second output signal value is updated on the basis of first and second output signal values ($y_1(x)$, $y_2(x)$) detected in the area of the threshold value ($y_o$) associated to the first output signal value.

**24.** Device according to claim 23, comprising means for accounting for a factor ($k_i$) depending on the ratio of the first exposure time ($T_{int,long}$) to the second exposure time ($T_{int,short}$) for adjusting the first and second output signal values ($y_1(x)$, $y_2(x)$).

**25.** Device according to one of claims 15 to 17, comprising means for causing a shift of the first and second output signal values relative to each other by the calculating rules, wherein the amount of the shift corresponds to a difference ($y_{diff}$) between the first output signal value ($y_1(x)$) and the second output signal value ($y_2(x)$) in the region of the threshold value ($y_o$) associated to the first output signal value, and for adjusting the first and second output signal values ($y_1(x)$, $y_2(x)$) a factor ($K$) depending on the ratio of the exposure times ($T_{int,long}$, $T_{int,short}$) is used, wherein the factor ($K$) depending on the ratio of the exposure times is updated on the basis of the detected first and second output signal values within a predetermined interval ($y_{o1}$, $y_{o2}$) of signal values.

**26.** Device according to claim 25, comprising means for determining the factor $K$ depending on the ratio of the exposure times according to the following equation:

$$K = \frac{1}{N}\sum_{j=1}^{N} k_j \quad \text{with} \quad k_j = \frac{y_{1,j}(x) - y_{max,1}}{y_{2,j}(x) - y_{max,2}} \qquad \text{(Equ. 11)}$$

for every $y_{o2} < y < y_{o1}$
wherein $y_{1,j}(x)$ are the first output signal values in the interval between $y_{o1}$ and $y_{o2}$;
$y_{2,j}(x)$ are the second output signal values associated to the values $y_{1,j}(x)$ ;

$y_{max,1}$ is the first output signal value without any illumination; and
$y_{max,2}$ is the second output signal value without any illumination.

27. Device according to claim 26, comprising means for calculating the image signal values y(x) according to the following rule:

$$y(x) = \begin{cases} y_1(x) + y_g & \text{for } y_1(x) \geq y_o \\ y_{off} + K(y_2(x) - y_{max,2}) & \text{for } y_1(x) < y_o \end{cases} \quad (\text{Equ. 12})$$

wherein $y_1(x)$ is the first output signal value;
$y_g$ is a constant;
$y_2(x)$ is the associated second output signal value; and
$y_{off}$ is a value depending on the constant ($y_g$) added to the first output signal value ($y_1(x)$),

28. Device according to claim 27, wherein the constant $y_g$ and the value $y_{off}$ have the following relation:

$$y_{off} = y_{max,2} + (y_g - y_{diff}) \quad (\text{Equ. 5})$$

**Revendications**

1. Procédé de génération d'images à l'aide d'une pluralité d'éléments capteurs d'image (12) qui génèrent, à l'aide de différents temps d'exposition, différentes valeurs de signal de sortie, pour chaque élément capteur d'image (12) étant générée une valeur de signal d'image (y(x)) au moyen des étapes suivantes consistant à :

   a) capter une première valeur de signal de sortie ($y_1(x)$) à l'aide d'un premier temps d'exposition ($T_{int,lang}$) ;
   b) capter une deuxième valeur de signal de sortie ($y_2(x)$) associée à l'aide d'un deuxième temps d'exposition ($T_{int,kurz}$) ;
   c) si la première valeur de signal de sortie n'excède pas une valeur limite ($y_o$) lui associée, déterminer la valeur de signal d'image (y(x)) à l'aide d'une première règle de calcul sur base de la première valeur de signal de sortie ($y_1(x)$) ; et
   d) si la première valeur de signal de sortie excède la valeur limite ($y_o$), déterminer la valeur de signal d'image (y(x)) à l'aide d'au moins une deuxième règle de calcul sur base d'au moins la deuxième valeur de signal de sortie ($y_2(x)$),

   la première et la deuxième valeur de signal de sortie ($y_1(x)$ $y_2(x)$), étant décalées l'une par rapport à l'autre et adaptées l'une à l'autre par les règles de calcul de sorte qu'il ne se produise pas de saut perceptible entre une valeur de signal d'image qui est encore tout juste déterminée selon la première règle de calcul et une valeur de signal d'image qui est tout juste déjà déterminée selon la deuxième règle de calcul, et
   la première et la deuxième valeur de signal de sortie ($y_1(x)$, $y_2(x)$) étant déplacées par les règles de calcul l'une par rapport à l'autre d'une quantité qui correspond à une différence entre les deux valeurs de signal de sortie dans une plage de la valeur limite ($y_o$) associée à la première valeur de signal de sortie.

2. Procédé selon la revendication 1, dans lequel est générée, par la première règle de calcul, une première valeur de signal de sortie modifiée ($y_{1,neu}(x)$) par addition d'une constante ($y_g$) à la première valeur de signal de sortie ($y_1(x)$).

3. Procédé selon la revendication 2, dans lequel est générée, par la deuxième règle de calcul, une deuxième valeur de signal de sortie modifiée ($y_{2,neu}(x)$) qui est rétrocalculée au premier temps d'exposition.

4. Procédé selon la revendication 3, dans lequel la première valeur de signal de sortie modifiée ($y_{1,neu}(x)$) est utilisée comme valeur de signal d'image lorsque la première valeur de signal de sortie ($y_1(x)$) n'excède pas la valeur limite

($y_o$) lui associée, dans lequel la deuxième valeur de signal de sortie modifiée ($y_{2,neu}(x)$) est utilisée comme valeur de signal d'image lorsque la première valeur de signal de sortie ($y_1(x)$) excède la valeur limite ($y_o$) lui associée et que la deuxième valeur de signal de sortie modifiée ($y_{2,neu}(x)$) excède une valeur limite ($y_u$) lui associée, et dans lequel une combinaison d'une première valeur de signal de sortie modifiée pondérée et d'une deuxième valeur de signal de sortie modifiée pondérée est utilisée comme valeur de signal d'image lorsque la première valeur de signal de sortie ($y_1(x)$) excède la valeur limite ($y_o$) lui associée et que la deuxième valeur de signal de sortie modifiée ($y_{2,neu}(x)$) excède la valeur limite ($y_u$) lui associée.

5. Procédé selon la revendication 4, dans lequel les valeurs de signal d'image y(x) sont déterminées selon la règle suivante :

$$y(x) \begin{cases} y_{1,neu}(x) & pour \ y_1(x) \geq y_o \\ g_1(y_{1,neu}) \cdot y_{1,neu}(x) + g_2(y_{2,neu}) \cdot y_{2,neu}(x) & pour \ y_1(x) < y_o \ et \ y_{2,neu}(x) > y_u \\ y_{2,neu}(x) & pour \ y_1(x) < y_o \ et \ y_{2,neu}(x) < y_u \end{cases}$$

$$(\text{Eq. 6})$$

où $y_{1,neu}(x)$ est la première valeur de signal de sortie modifiée ;
$y_1(x)$ est la première valeur de signal de sortie ;
$y_{2,neu}(x)$ est la deuxième valeur de signal de sortie modifiée ;
$g_1(y_{1,neu})$ et $g_2(y_{2,neu})$ sont des fonctions de pondération ;
$y_o$ est la valeur limite associée à la première valeur de signal de sortie ; et
$y_u$ est la valeur limite associée à la deuxième valeur de signal de sortie.

6. Procédé selon la revendication 5, dans lequel il est tenu compte, lors de la génération de la deuxième valeur de signal de sortie modifiée ($y_{2,neu}(X)$) d'un facteur ($K_{21}$) qui est fonction du rapport entre le premier temps d'exposition ($T_{int,lang}$) et le deuxième temps d'exposition ($T_{int,kurz}$).

7. Procédé selon la revendication 6, dans lequel la deuxième valeur de signal de sortie modifiée ($y_{2,neu}(x)$) est calculée selon l'équation suivante :

$$y_{2,neu}(x) = K_{21} \cdot (y_2(x) - y_{max,2}) + y_{off} \qquad (\text{Eq. 4})$$

où ($K_{21}$) est le rapport entre les temps d'exposition ($T_{int,lang}$, $T_{int,kurz}$) ;
$y_2(x)$ est la deuxième valeur de signal de sortie ;
$y_{max,2}$ est la deuxième valeur de signal de sortie sans illumination; et
$y_{off}$ est une valeur qui est fonction de la constante ($y_g$) qui est additionnée à la première valeur de signal de sortie ($y_1(x)$).

8. Procédé selon la revendication 7, dans lequel la constante $y_g$ et la valeur $y_{off}$ présentent le rapport suivant :

$$y_{off} = y_{max,2} + (y_g - y_{diff}) \qquad (\text{Eq. 5})$$

où $y_{diff}$ correspond à une différence entre la première et la deuxième valeur de signal de sortie ($y_1(x)$, $y_2(x)$) dans la plage de la valeur limite ($y_o$) associée à la première valeur de signal de sortie.

9. Procédé selon l'une des revendications 1 à 3, dans lequel il est provoqué, pour le déplacement et l'adaptation par les règles de calcul, un déplacement de la première et de la deuxième valeur de signal de sortie l'une par rapport à l'autre dont la quantité correspond à une différence ($O_i$) entre la première valeur de signal de sortie ($y_1(x)$) et la deuxième valeur de signal de sortie ($y_2(x)$) dans la plage de la valeur limite ($y_o$) associée à la première valeur de signal de sortie, la différence ($O_i$) étant mise à jour pour l'adaptation de la première et de la deuxième valeur de signal de sortie sur base de la première et de la deuxième valeur de signal de sortie ($y_1(x)$, $y_2(x)$) détectées dans la plage de la valeur limite ($y_o$) associée à la première valeur de signal de sortie.

10. Procédé selon la revendication 9, dans lequel il est, par ailleurs, tenu compte, pour l'adaptation de la première et de la deuxième valeur de signal de sortie ($y_1(x)$, $y_2(x)$), d'un facteur ($k_i$) qui est fonction du rapport entre le premier temps d'exposition ($T_{int,lang}$) et le deuxième temps d'exposition ($T_{int,kurz}$).

11. Procédé selon l'une des revendications 1 à 3, dans lequel il est provoqué, pour le déplacement et l'adaptation par les règles de calcul, un déplacement de la première et de la deuxième valeur de signal de sortie l'une par rapport à l'autre dont la quantité correspond à une différence ($y_{diff}$) entre la première valeur de signal de sortie ($y_1(x)$) et la deuxième valeur de signal de sortie ($y_2(x)$) dans la plage de la valeur limite ($y_o$) associée à la première valeur de signal de sortie, et il est utilisé, pour l'adaptation de la première et de la deuxième valeur de signal de sortie ($y_1(x)$, $y_2(x)$), un facteur ($K$) qui est fonction du rapport entre les temps d'exposition ($T_{int,lang}$, $T_{int,kurz}$), le facteur ($K$) fonction du rapport entre les temps d'exposition étant mis à jour sur base de premières et deuxièmes valeurs de signal de sortie situées dans un intervalle prédéterminé ($y_{o1}$, $y_{o2}$) de valeurs de signal.

12. Procédé selon la revendication 11, dans lequel le facteur K qui est fonction du rapport entre les temps d'exposition est déterminé selon l'équation suivante :

$$K = \frac{1}{N} \sum_{j=1}^{N} k_j \quad avec \quad k_j = \frac{y_{1,j}(x) - y_{max,1}}{y_{2,j}(x) - y_{max,2}} \qquad \text{(Eq. 11)}$$

pour toutes les $y_{02} < y < y_{o1}$
où $y_{1,j}(x)$ est les premières valeurs de signal de sortie situées dans la plage entre $y_{o1}$ et $y_{o2}$ ;
$y_{2j}(x)$ est les deuxièmes valeurs de signal de sortie associées aux valeurs $y_{1,j}(x)$ ;
$y_{max,1}$ est la première valeur de signal de sortie sans illumination ; et
$y_{max,2}$ est la deuxième valeur de signal de sortie sans illumination.

13. Procédé selon la revendication 12, dans lequel les valeurs de signal d'image $y(x)$ aux étapes (c) et (d) sont déterminées comme suit :

$$y(x) = \begin{cases} y_1(x) + y_g & pour \quad y_1(x) \geq y_o \\ y_{off} + K(y_2(x) - y_{max,2}) & pour \quad y_1(x) < y_o \end{cases} \qquad \text{(Eq. 12)}$$

où $y_1(x)$ est la première valeur de signal de sortie ;
$y_g$ est une constante ;
$y_2(x)$ est la deuxième valeur de signal de sortie associée ; et
$y_{off}$ est une valeur qui est fonction de la constante ($y_g$) qui est additionnée à la première valeur de signal de sortie ($y_1(x)$).

14. Procédé selon la revendication 13, dans lequel la constante $y_g$ et la valeur $y_{off}$ présentent le rapport suivant :

$$y_{off} = y_{max,2} + (y_g - y_{diff}) \qquad \text{(Eq. 5)}$$

15. Dispositif de génération d'images aux caractéristiques suivantes :

un capteur d'images (10) avec une pluralité d'éléments capteurs d'image (12) qui génèrent, à l'aide de différents temps d'exposition, différentes valeurs de signal de sortie ;
un dispositif destiné à saisir une première valeur de signal de sortie ($y_1(x)$) pour chaque élément capteur d'image (12) à l'aide d'un premier temps d'exposition ($T_{int,lang}$) et à saisir une deuxième valeur de signal de sortie ($y_2(x)$) associée pour chaque élément capteur d'image (12) à l'aide d'un deuxième temps d'exposition ($T_{int,kurz}$) ; et

un dispositif de génération de valeur de signal d'image (16) destiné à générer des valeurs de signal d'image respectives (y(x)) pour des éléments capteurs d'images (12) respectifs, qui présente un dispositif (20) destiné à déterminer la valeur de signal d'images (y(x)) à l'aide d'une première règle de calcul sur base de la première valeur de signal de sortie ($y_1(x)$) si la première valeur de signal de sortie n'excède pas une valeur limite ($y_o$) lui associée, et qui présente un dispositif (22) destiné à déterminer la valeur de signal d'images (y(x)) à l'aide d'au moins une deuxième règle de calcul sur base d'au moins la deuxième valeur de signal de sortie ($y_2(x)$) si la première valeur de signal de sortie excède la valeur limite ($y_o$),

la première et la deuxième valeur de signal de sortie ($y_1(x)$, $y_2(x)$) étant décalées l'une par rapport à l'autre et adaptées l'une à l'autre par les règles de calcul de sorte qu'il ne se produise pas de saut perceptible entre une valeur de signal d'image qui est encore tout juste déterminée selon la première règle de calcul et une valeur de signal d'image qui est tout juste déjà déterminée selon la deuxième règle de calcul, et la première et la deuxième valeur de signal de sortie ($y_1(x)$, $y_2(x)$) étant déplacées par les règles de calcul l'une par rapport à l'autre d'une quantité qui correspond à une différence entre les deux valeurs de signal de sortie dans une plage de la valeur limite ($y_o$) associée à la première valeur de signal de sortie.

16. Dispositif selon la revendication 15, présentant un dispositif destiné à générer une première valeur de signal de sortie modifiée ($y_{1,neu}(x)$) par addition d'une constante ($y_g$) à la première valeur de signal de sortie ($y_1(x)$) par la première règle de calcul.

17. Dispositif selon la revendication 16, présentant un dispositif destiné à générer une deuxième valeur de signal de sortie modifiée ($y_{2,neu}(x)$) qui est rétrocalculée au premier temps d'exposition, par la deuxième règle de calcul.

18. Dispositif selon la revendication 17, qui présente un dispositif destiné à utiliser la première valeur de signal de sortie modifiée ($y_{1,neu}(x)$) comme valeur de signal d'image lorsque la première valeur de signal de sortie ($y_1(x)$) n'excède pas la valeur limite ($y_o$) lui associée, à utiliser la deuxième valeur de signal de sortie modifiée ($y_{2,neu}(x)$) comme valeur de signal d'image lorsque la première valeur de signal de sortie ($y_1(x)$) excède la valeur limite ($y_o$) lui associée et la deuxième valeur de signal de sortie modifiée ($y_{2,neu}(x)$) excède une valeur limite ($y_u$) lui associée, et à utiliser une combinaison d'une première valeur de signal de sortie modifiée pondérée et d'une deuxième valeur de signal de sortie modifiée pondérée comme valeur de signal d'image lorsque la première valeur de signal de sortie ($y_1(x)$) excède la valeur limite ($y_o$) lui associée et que la deuxième valeur de signal de sortie modifiée ($y_{2,neu}(x)$) excède une valeur limite ($y_u$) lui associée.

19. Dispositif selon la revendication 18, présentant un dispositif destiné à déterminer les valeurs de signal d'image y(x) selon la règle suivante :

$$y(x)\begin{cases} y_{1,neu}(x) & pour\ y_1(x) \geq y_o \\ g_1(y_{1,neu}) \cdot y_{1,neu}(x) + g_2(y_{2,neu}) \cdot y_{2,neu}(x) & pour\ \ y_1(x) < y_o \ \ et \ \ y_{2,neu}(x) > y_u \\ y_{2,neu}(x) & pour\ \ y_1(x) < y_o \ \ et \ \ y_{2,neu}(x) < y_u \end{cases}$$

$$(Eq.\ 6)$$

où $y_{1,neu}(X)$ est la première valeur de signal de sortie modifiée ;
$y_1(x)$ est la première valeur de signal de sortie ;
$y_{2,neu}(x)$ est la deuxième valeur de signal de sortie modifiée ;
$g_1(y_{1,neu})$ et $g_2(y_{2,neu})$ sont des fonctions de pondération ;
$y_o$ est la valeur limite associée à la première valeur de signal de sortie ; et
$y_u$ est la valeur limite associée à la deuxième valeur de signal de sortie.

20. Dispositif selon la revendication 19, présentant un dispositif destiné à tenir compte d'un facteur ($K_{21}$) qui est fonction du rapport entre le premier temps d'exposition ($T_{int,land}$) et le deuxième temps d'exposition ($T_{int,kurz}$) lors de la génération de la deuxième valeur de signal de sorties modifiée ($y_{2,neu}(x)$).

21. Dispositif selon la revendication 20, présentant un dispositif destiné à calculer la deuxième valeur de signal de sortie modifiée ($y_{2,neu}(x)$) selon l'équation suivante :

$$y_{2,neu}(x) = K_{21} \cdot (y_2(x) - y_{max,2}) + y_{off} \qquad \text{(Eq. 4)}$$

où ($K_{21}$) est le rapport entre les temps d'exposition ($T_{int,lang}$, $T_{int,kurz}$) ;
$y_2(x)$ est la deuxième valeur de signal de sortie ;
$y_{max,2}$ est la deuxième valeur de signal de sortie sans illumination; et
$y_{off}$ est une valeur qui est fonction de la constante ($y_g$) qui est additionnée à la première valeur de signal de sortie ($y_1(x)$).

**22.** Dispositif selon la revendication 21, dans lequel la constante $y_g$ et la valeur $y_{off}$ présentent le rapport suivant :

$$y_{off} = y_{max,2} + (y_g - y_{diff}) \qquad \text{(Eq. 5)}$$

où $y_{diff}$ correspond à une différence entre la première et la deuxième valeur de signal de sortie ($y_1(x)$, $y_2(x)$) dans la plage de la valeur limite ($y_o$) associée à la première valeur de signal de sortie.

**23.** Dispositif selon l'une des revendications 15 à 17, présentant un dispositif destiné à provoquer un déplacement de la première et de la deuxième valeur de signal de sortie l'une par rapport à l'autre par les règles de calcul, la quantité du déplacement correspondant à une différence ($O_i$) entre la première valeur de signal de sortie ($y_1(x)$) et la deuxième valeur de signal de sortie ($y_2(x)$) dans la plage de la valeur limite ($y_o$) associée à la première valeur de signal de sortie, la différence ($O_i$) étant mise à jour pour l'adaptation de la première et de la deuxième valeur de signal de sortie sur base de la première et de la deuxième valeur de signal de sortie ($y_1(x)$, $y_2(x)$) détectées dans la plage de la valeur limite ($y_o$) associée à la première valeur de signal de sortie.

**24.** Dispositif selon la revendication 23, présentant un dispositif destiné à tenir compte d'un facteur ($k_i$) qui est fonction du rapport entre le premier temps d'exposition ($T_{int,lang}$) et le deuxième temps d'exposition ($T_{int,kurz}$), pour l'adaptation de la première et de la deuxième valeur de signal de sortie ($y_1(x)$, $y_2(x)$).

**25.** Dispositif selon l'une des revendications 15 à 17, présentant un dispositif destiné à provoquer un déplacement de la première et de la deuxième valeur de signal de sortie l'une par rapport à l'autre par les règles de calcul, la quantité du déplacement correspondant à une différence ($y_{diff}$) entre la première valeur de signal de sortie ($y_1(x)$) et la deuxième valeur de signal de sortie ($y_2(x)$) dans la plage de la valeur limite ($y_o$) associée à la première valeur de signal de sortie, et il est utilisé, pour l'adaptation de la première et de la deuxième valeur de signal de sortie ($y_1(x)$, $y_2(x)$), un facteur ($K$) qui est fonction du rapport entre les temps d'exposition ($T_{int,lang}$, $T_{int,kurz}$), le facteur ($K$) fonction du rapport entre les temps d'exposition étant mis à jour sur base de premières et deuxièmes valeurs de signal de sortie situées dans un intervalle prédéterminé ($y_{o1}$, $y_{o2}$) de valeurs de signal.

**26.** Dispositif selon la revendication 25, présentant un dispositif destiné à déterminer le facteur K qui est fonction du rapport entre les temps d'exposition, selon l'équation suivante :

$$K = \frac{1}{N} \sum_{j=1}^{N} k_j \quad avec \quad k_j = \frac{y_{1,j}(x) - y_{max,1}}{y_{2,j}(x) - y_{max,2}} \qquad \text{(Eq. 11)}$$

pour toutes les $y_{02} < y < y_{o1}$
où $y_{1,j}(x)$ est les premières valeurs de signal de sortie situées dans la plage entre $y_{o1}$ et $y_{o2}$ ;
$y_{2j}(x)$ est les deuxièmes valeurs de signal de sortie associées aux valeurs $y_{1j}(x)$ ;
$y_{max,1}$ est la première valeur de signal de sortie sans illumination ; et
$y_{max,2}$ est la deuxième valeur de signal de sortie sans illumination.

**27.** Dispositif selon la revendication 26, présentant un dispositif destiné à déterminer les valeurs de signal d'image y(x) selon la règle suivante :

$$y(x) = \begin{cases} y_1(x) + y_g & pour \quad y_1(x) \geq y_o \\ y_{off} + K(y_2(x) - y_{max,2}) & pour \quad y_1(x) < y_o \end{cases} \qquad \text{(Eq. 12)}$$

où $y_1(x)$ est la première valeur de signal de sortie ;
$y_g$ est une constante ;
$y_2(x)$ est la deuxième valeur de signal de sortie associée ; et
$y_{off}$ est une valeur qui est fonction de la constante ($y_g$) qui est additionnée à la première valeur de signal de sortie ($y_1(x)$).

**28.** Dispositif selon la revendication 27, dans lequel la constante $y_g$ et la valeur $y_{off}$ présentent le rapport suivant :

$$y_{off} = y_{max,2} + (y_g - y_{diff}) \qquad \text{(Eq. 5).}$$

Fig. 1

Fig. 2

Fig. 3

EP 1 346 561 B1

Fig. 4